# EUROPÄISCHE PATENTSCHRIFT

(11) **EP 2 285 245 B1**
(45) Veröffentlichungstag und Bekanntmachung des Hinweises auf die Patenterteilung: **14.12.2016**
(21) Anmeldenummer: 09757860.3
(22) Anmeldetag: 03.06.2009
(51) Int. Cl.: A23L 3/3418, A23L 3/3445, B65D 81/20

(54) **VORRICHTUNG ZUM KONSERVIEREN VON LEBENSMITTELN**
DEVICE FOR PRESERVING FOODS
APPAREIL POUR LA CONSERVATION DE PRODUITS ALIMENTAIRES

(30) Priorität: 03.06.2008 AT 8932008; 30.04.2009 AT 6692009
(43) Veröffentlichungstag der Anmeldung: 23.02.2011
(73) Patentinhaber: Innveri AG, 3280 Murten (CH)
(72) Erfinder: Manfred, Juni, 3212 Kleingurmels (CH)
(74) Vertreter: Keschmann, Marc
(86) Internationale Anmeldenummer: PCT/IB2009/005829
(87) Internationale Veröffentlichungsnummer: WO 2009/147506

(56) Entgegenhaltungen:
- EP-A1- 0 471 611
- EP-A1- 1 900 649
- WO-A1-90/08474
- WO-A1-97/17269
- WO-A2-2007/131683
- CA-A1- 2 104 741
- CA-C- 2 037 495
- DE-A1- 10 348 119
- DE-A1-102005 063 300
- FR-A1- 2 802 270
- JP-A- 9 009 938
- JP-A- 10 033 388
- JP-A- 11 225 722
- US-A- 4 055 931
- US-A- 4 181 146

## Beschreibung

Die Erfindung betrifft eine Vorrichtung zum Konservieren von Lebensmitteln mit Hilfe eines Schutzgases, insbesondere mit Hilfe eines Inertgases.

In diesem Zusammenhang wird in der Fachwelt von MAP - Verpacken gesprochen (Modified Atmosphere Packaging = MAP).

Als Lebensmittelbehälter ist im Rahmen der Erfindung jegliches Behältnis zu verstehen, das zur Aufnahme von festen oder flüssigen Lebensmitteln dient, wie z.B. Dosen, Beutel, Säcke, Gläser und dgl.

Eine Vorrichtung zum Konservieren von Lebensmitteln ist bleispielsweise der EP 1145640 A1 zu entnehmen. Sie dient dazu, den Rauminhalt des gasdicht verschlossenen Lebensmittelsbehälters mit einem Inertgas, und insbesondere beispielsweise Kohlendioxid (CO₂), zu füllen, wobei gleichzeitig die in dem Behälter vorhandene Luft entweichen muss. Während dieses Spülvorgangs wird Inertgas über ein Einlassventil eingefüllt, wobei gleichzeitig Luft über ein gesondertes Auslassventil austritt. Die in dem Lebensmittelbehälter gelagerten Lebensmittel befinden sich nach dem Spülvorgang in einer Schutzatmosphäre, sodass die Haltbarkeit entscheidend verbessert wird.

Weitere verschiedene Ausbildungen zum Konservieren von Lebensmitteln sind in den Dokumenten WO 97/17269 A, JP 09009938 A, JP 11225722 A, FR-A-2802270, US-A-4181146, WO 2007/131683 A, JP 10033388 A, EP-A-0471611, DE 10348119 A1, CA-A1-2104741, DE 102005063300 A1, EP-A-1900649, CA-A1-2037495 und US-A-4055931 beschrieben.

Das Gaseinlassventil und das Gasauslassventil sind bei derartigen Vorrichtungen meist fest mit dem Lebensmittelbehälter verbunden bzw. in diesem integriert, beispielsweise in einer Seitenwand des Behälters oder in dem Deckel. Dies bringt den Nachteil mit sich, dass die Ventile im Zuge der üblichen Handhabung im Haushalt leicht verschmutzen oder verstopfen können. Es sind daher Vorkehrungen zu treffen, welche einen Ausbau und ein zerlegen der Ventile in einfacher Weise ermöglichen, um die Reinigung zu vereinfachen. Ein weiteres Problem bei den Ventilen ist die Dichtung, da die Ventildichtungen in der Regel einem hohen Verscheiß unterworfen sind, insbesondere dann, wenn sie häufigen Temperaturschwankungen unterworfen sind, wie dies bei Lebensmittelbehältern der Fall ist, da ja eine Lagerung sowohl bei Raumtemperatur als auch bei kühleren Temperaturen, wie beispielsweise im Kühlschrank oder im Tiefkühlfach, aber auch ein Kontakt mit überaus hohen Temperaturen und insbesondere mit kochendem Wasser in Frage kommt.

Die Erfindung zielt nun darauf ab, das MAP-Verpacken auch im Haushalt und in der Kleingastronomie zu ermöglich und die entsprechenden Bestanteile eines Gesamtkonzepts bereitzustellen, das es dem Kunden ohne großen Aufwand den Erhalt der Frische und der Qualität der Nahrungsmittel zu garantieren ermöglicht. Nach jedem Öffnen der Verpackung soll er diese nach dem Wiederverschließen kurz und einfach mit Schutzgas spülen oder versehen können und somit die Lebensmittel in einer optimalen Atmosphäre aufbewahren können.

Es soll unter anderem ein einfaches und handliches Gerät geschaffen werden, das sich durch eine einfache Bedienbarkeit auszeichnet und das den Anforderungen im Haushalt gerecht wird. Das Gerät soll für eine Mehrzahl von Spülvorgängen ausgelegt sein, ohne dass ein ständiges Auswechseln von Gaskartuschen od. dgl. notwendig wäre. Weiters sollen sicherheitstechnische Probleme im Zusammenhang mit der Lagerung von Gas unter hohem Druck vermieden werden.

Herkömmliche Vorrichtungen sollen dahingehend verbessert werden, dass der bauliche Aufwand insbesondere für das Einlass- und das Auslassventil verringert wird und dass die Möglichkeit geschaffen wird, die Ventile in einfacher Art und Weise zu reinigen bzw. Verschleißteile wie Dichtungen auszutauschen.

Zur Lösung dieser Aufgabe ist erfindungsgemäß eine Vorrichtung zum Konservieren von Lebensmitteln mit Hilfe eines Schutzgases vorgesehen, umfassend wenigstens ein einen Gasvorratsbehälter aufweisendes Standgerät, ein mit dem Standgerät über wenigstens eine flexible Leitung, insbesondere Druckschlauch, verbundenes Handgerät und einen gasdicht verschließbaren Lebensmittelbehälter, wobei das Handgerät zum Anschließen des Gasvorratsbehälters an eine Ventileinheit des Lebensmittelbehälters vorgesehen ist und die Ventileinheit ein Einlass- und ein Auslassventil aufweist.

Das Standgerät besteht aus einem Gehäuse, in welchem eine oder mehrere Gasflaschen neben- oder übereinander angeordnet sind. Bevorzugt sind dabei im Standgerät wenigstens zwei Gasvorratsbehälter, insbesondere Gaszylinder angeordnet, die vorzugsweise voneinander verschiedene Gasmischungen enthalten und über ein Wahlventil an das Handgerät angeschlossen sind. Als Gasvorratsbehälter kommen beispielsweise Gasflaschen zum Einsatz, insbesondere sogenannte Kleinflaschen mit einem Volumen von z.B. 0,75 - 1,3 Liter. Im Standgerät kann je nach Druckbereich in den Gasflaschen ein Druckminderer montiert sein, an welche die Gasflaschen angeschlossen sind. Sind mehrere Gasflaschen im Einsatz sind diese ggf. über den jeweiligen Druckminderer an ein Wahl-Ventil angeschlossen, wobei die jeweilige Gasflasche über das Wahl-Ventil angewählt werden kann. Das Wahl-Ventil kann über einen Drehschalter oder einen Knopf mechanisch oder elektrisch angesteuert werden. An die Ausgangsleitung des Standgeräts ist erfindungsgemäß ein sogenanntes Handgerät angeschlossen. Das Handgerät ist dabei über einen flexiblen Verbindungsschlauch oder dgl., z.B. einen Spiralschlauch, angeschlossen und ermöglicht es, das Schutzgas einem Lebensmittelbehälter zuzuführen ohne dabei das ganze Standgerät enthaltend den oder die Vorratsbehälter (z.B. Gasflaschen, Gaszylinder) zu manipulieren oder zu deplatzieren. Das Handgerät weist dabei bevorzugt ein eigenes Ventil auf, welches das Schutzgas wahlweise freigibt oder zurückhält. Die Betätigung des Handgeräteventils kann dabei mit Hilfe eines Betätigungsknopfes erfolgen oder aber auch auf Grund des Ansetzens des Handgerätes auf ein Einlassventil des Lebensmittelbehälters, wodurch ein Betätigungsglied verlagert wird.

Zum Konservieren eines Lebensmittels strömt das Gas somit aus der Gasflasche über den Druckminderer durch das Wahl-Ventil und das Handgerät über das Handgeräteventil und ein Behälterventil in den Lebensmittelbehälter oder -beutel. Dieser kann entweder nur begast oder auch gespült werden.

Dadurch, dass das Einlass- und das Auslassventil in einer Ventileinheit zusammengefasst sind, wird der bauliche Aufwand minimiert und die Möglichkeit geschaffen, beide Ventile gleichzeitig etwa durch Ansetzen des Handgeräts zu aktivieren bzw. zu öffnen. Des weiteren wird die Möglichkeit geschaffen, durch Ausbau bzw. Reinigen der Ventileinheit gleich beide Ventile, nämlich sowohl das Einlass- als auch das Auslassventil, entsprechend instand zu setzen, wodurch der Aufwand verringert wird. Dadurch, dass bei Ansetzen des Handgeräts an die Ventileinheit nicht nur das Einlassventil geöffnet wird, sondern beispielsweise durch mechanische Betätigung auch das Auslassventil geöffnet wird, kann die in dem Lebensmittelbehälter enthaltene Luft ungehindert austreten und durch das Einlassventil einströmende Schutzgas ersetzt werden, sodass der Spülvorgang vereinfacht wird. Es ist bei einer derartigen Ausbildung nicht erforderlich, dass das über das Einlassventil eingebrachte Schutzgas erst einen Überdruck im Behälterinneren bewirkt, wodurch das Auslassventil geöffnet wird, wenn es beispielsweise als Überdruckventil ausgebildet ist, wodurch der Gasaustausch erschwert würde. Bei der erfindungsgemäßen Ausbildung hingegen ist es lediglich erforderlich, dass aufgrund des eingebrachten Schutzgases und bei geeigneter Anordnung der Ein- und der Auslassöffnungen Turbulenzen innerhalb des Lebensmittelbehälters erzeugt werden, die dazu führen, dass das eingebrachte Schutzgas die in dem Behälter vorhandene Luft verdrängt und damit sichergestellt ist, dass das eingebrachte Schutzgas aufgrund der in vorteilhafter Weise erzeugten zirkulären Strömungen im Inneren des Behälters in kurzer Zeit den gesamten Rauminhalt ausfüllt, ohne dass hierbei eine zu große Menge des Schutzgases durch Ausströmen wiederum verloren geht.

In bevorzugter Weise ist die Ausbildung hierbei derart weitergebildet, dass das Einlassventil radial innerhalb des Auslassventils angeordnet ist, wobei besonders bevorzugt das Einlassund das Auslassventil jeweils eine Ventilkammer aufweisen und die Ventilkammer des Auslassventils als Ringkammer ausgebildet ist und die Ventilkammer des Einlassventils in axialer Richtung gesehen umgibt. Bei einer derartigen Ausbildung erfolgt das Einbringen des Schutzgases über das zentral angeordnete Einlassventil, wobei die Anordnung der Auslassöffnungen radial außerhalb und bevorzugt über den Umfang der Ventileinheit verteilt die Entstehung zirkulärer Strömungen im Inneren des Lebensmittelbehälters begünstigt. Außerdem ergibt sich eine besonders Platz sparende Konstruktion.

Gemäß einer bevorzugten Weiterbildung weist die Ventileinheit eine in axialer Richtung verschiebbare Anschlagfläche für ein Betätigungsglied des Handgeräts auf, sodass das Einlass- und das Auslassventil beim axialen Einführen des Handgeräts ggf. unter Verwendung des Gasdruckes geöffnet werden. Beim Ansetzen des Handgeräts an die Ventileinheit kommt somit ein Betätigungsglied des Handgeräts zur Wirkung, das unter Ausnutzung des mechanischen Anpressdrucks die in axialer Richtung verschiebbare Anschlagfläche der Ventileinheit verschiebt, wodurch das Öffnen des Einlass- und des Auslassventils bewirkt wird. Das Öffnen des Einlass- bzw. des Auslassventils erfolgt hierbei ggf. auch unter Verwendung des Gasdrucks des eingebrachten Inertgases, wobei gemäß einer bevorzugten Weiterbildung beim Anschließen bzw. Ansetzen des Handgeräts an die Ventileinheit das Ausströmen des Gases aus dem Gasbehälter automatisch eingeleitet wird, zu welchem Zweck die Ausbildung bevorzugt derart getroffen ist, dass das Handgerät ein Ventil aufweist und das Betätigungsglied des Handgeräts als gegen die Kraft einer Feder verschiebbares Ventilglied des Handgeräteventils ausgebildet ist oder mit diesem zusammenwirkt. Das Betätigungsglied des Handgeräts dient somit einerseits dazu, das Handgeräteventil zu öffnen und andererseits beim Ansetzen an die Ventileinheit dazu, das Einlassventil und das Auslassventil der Ventileinheit zu öffnen, sodass beim Ansetzen des Handgeräts an die Ventileinheit alle Ventile gleichzeitig geöffnet werden.

Gemäß einer bevorzugten Ausbildung wird das Ventil dadurch betätigt, dass die Ventileinheit einen Ventilkolben aufweist, der sowohl wenigstens eine Gasdurchtrittsöffnung des Einlassventils als auch wenigstens eine Gasdurchtrittsöffnung des Auslassventils aufweist. Das Einlass- und das Auslassventil weisen somit einen gemeinsamen Ventilkolben auf. Dadurch wird die gemeinsame Betätigung des Einlass- und des Auslassventils ermöglicht, wobei die Ventileinheit mit Vorteil ein gemeinsam mit dem Ventilkolben verschieb- und/oder verformbares Dichtungselement aufweist, das in Abhängigkeit von der Verschiebelage bzw. der Verformung eine Verbindung zwischen den Ventilkammern öffnet oder absperrt.

Eine konstruktiv besonders einfache Ausbildung ergibt sich, wenn, wie dies einer bevorzugten Weiterbildung entspricht, der Ventilkolben oder eine in den Ventilkolben eintauchende, mit diesem bewegbare Kolbenstange mit einer axialen Gasdurchtrittsbohrung versehen ist, die als Sackbohrung ausgebildet ist und mit wenigstens einer radialen Bohrung in Verbindung steht, die an einer der Innenwand eines Dichtungselements mündet. Insbesondere wenn die der wenigstens einen radialen Bohrung benachbarte ringförmige Stirnfläche des Dichtungselements bevorzugt mit einem Anschlag des Ventilgehäuses zusammenwirkt, ergibt sich bei einer derartigen Ausbildung, dass das Dichtungselement beim Betätigen des Einlassventils derart verformt wird, dass ein Spalt zwischen der Wand der Bohrung des Dichtungselements und der Mündung der radialen Bohrung der Kolbenstange entsteht, sodass das über die zentrale Bohrung der Kolbenstange eingeführte Gas über die radiale Bohrung austreten und über entsprechende Ventilöffnungen in den Lebensmittelbehälter eintreten kann.

Bezüglich des Auslassventils wirkt der axial verschiebliche Ventilkolben als Ventilglied, das zum Verschließen des Auslassventils dichtend gegen ein entsprechendes Ventil pressbar ist, zu welchem Zweck eine bevorzugte Weiterbildung vorsieht, dass der Ventilsitz des Auslassventils von einer Dichtscheibe gebildet ist.

Bei einer alternativen Ausbildung der Ventileinheit ist bevorzugt vorgesehen, dass das Einlass- und das Auslassventil ein gemeinsames elastisches Dichtungselement aufweisen, wobei das Einlassventil von einem einen Ventilschnabel ausbildenden Bereich des Dichtungselements und das Auslassventil von einem eine Ventillippe ausbildenden Bereich des Dichtungselements gebildet ist, die eine Ventilplatte mit Auslassöffnungen übergreift. Die Ventileinheit kann dabei überaus einfach aufgebaut sein und im einfachsten Fall lediglich von dem Dichtungselement gebildet sein, das in eine Lebensmittelbehälterwand oder den Deckel eingesetzt ist.

Beim Konservieren von Lebensmitteln kann es auch wünschenswert sein, den Lebensmittelbehälter zu evakuieren. Die zu konservierenden Lebensmittel können entweder in dem evakuierten Behälter gelagert werden, oder es kann nach der Evakuierung des Behälters Inertgas eingefüllt werden. In diesem Zusammenhang ist die erfindungsgemäße Vorrichtung bevorzugt derart weitergebildet, dass eine Unterdruckquelle, wie z.B. eine Vakuumpumpe vorgesehen ist, die an das Handgerät anschließbar oder in diesem angeordnet ist. Dadurch, dass die Unterdruckquelle an das Handgerät anschließbar oder an diesem angeordnet ist, kann unter Verwendung ein und desselben Handgeräts wahlweise ein Vakuum im Lebensmittelbehälter erzeugt werden oder eine konventionelle Inertgasspülung oder beides vorgenommen werden. Beim Evakuieren des Lebensmittelbehälters wird die in dem Lebensmittelbehälter enthaltene Luft bevorzugt über die Austrittsöffnung(en) des Auslassventils abgesaugt und es ist die Vorrichtung in diesem Zusammenhang bevorzugt derart weitergebildet, dass das Handgerät die Austrittsöffnung(en) des Auslassventils abdeckend bzw. umfassend an die Ventileinheit anschließbar ist und wenigstens eine mit der Unterdruckquelle verbindbare, in einen mit den Austrittsöffnungen in Verbindung stehenden Raum mündende Absaugleitung aufweist.

Bei einer alternativen Ausbildung kann vorgesehen sein, dass die Austrittsöffnung(en) des Auslassventils gesondert verschließbar ist (sind), vorzugsweise mit Hilfe einer die Austrittsöffnung(en) durch verdrehen wahlweise überdeckenden Scheibe, und die Unterdruckquelle an die Gaszuführleitung des Handgeräts anschließbar ist.

weiters wird ein Lebensmittelbehälter mit einem Einlassventil für schutzgas beschrieben. Nebst den Voraussetzungen wie gute Ausgangsqualität von Produkt und Rohstoffen, geeignete Temperatur, gute Hygienebedingungen und dem Einsatz eines für das Produkt geeigneten Gasgemisches ist die Verwendung einer geeigneten auf die Produktgruppe zugeschnittenen dichten Verpackung von höchster Bedeutung. Genau dieser Punkt, die Optimierung der Verpackung ist ein entscheidender Faktor für die Effizient von MAP. Dabei wird unterschieden zwischen Lebensmittelbehältern für "atmende" Lebensmittel und Lebensmittelbehältern für "nicht atmende" Lebensmittel.

Behälter für "nicht atmende" Lebensmittel werden in der Regel bei allen Formen von MAP-Lebensmitteln außer Obst und Gemüse eingesetzt und müssen eine ausreichend niedrige Durchlässigkeit für Sauerstoff/Gas aufweisen, damit starke Barriereeigenschaften besitzen und dicht verschlossen sein, da andernfalls zu viel Gas austreten kann. Generell sollte der Restsauerstoffgehalt in solchen Behältern unter 1 bis 2 % liegen. Bei höheren Sauerstoffwerten kann MAP in Bezug auf den oxidationsschutz nicht optimal eingesetzt werden. Ausnahmen hiervon sind spezielle MAP-Atmosphären, z.B. für Frischfleisch, die mit hohen Sauerstoffkonzentrationen arbeiten. Kohlendioxid sollte, um seine bakteriostatische Wirkung entfalten zu können, in einer Konzentration von mindestens 20 % in der Schutzatmosphäre enthalten sein.

Bei Behältern für atmende Lebensmittel (Gemüse und Obst) ist die Permeabilität wichtig. Für den erfolgreichen Einsatz von MAP bei frischem Obst und Gemüse muss Verpackungsmaterial mit der richtigen Permeabilität gewählt werden, da Obst und Gemüse auch nach der Ernte die natürliche Atmung fortsetzt (Respiration). Sind die Produkte in einer nicht ausreichend durchlässigen Folie versiegelt, entwickeln sich unerwünschte anaerobe Bedingungen (< 1% O₂ und > 20% CO₂), die Qualitätsverluste zur Folge haben. Werden Obst und Gemüse dagegen in einer zu stark durchlässigen Folie verpackt, bleibt nur wenig oder gar nichts von der Schutzatmosphäre übrig, und der Feuchtigkeitsverlust führt wiederum zu einer Beschleunigung des Qualitätsverlustes. Beispiele für Materialien, die für MAP-Verpackungen frischer Produkte (Obst und Gemüse) verwendet werden können, sind Folien mit Mikroporen oder LDPE-Folien. Weist somit die Verpackung die richtige Permeabilität auf, kann das Produkt seine natürliche Atmung fortsetzen und bleibt dadurch ohne Konservierungsmittel länger frisch.

Der permeable Behälter kann wiederverschließbar und/oder wiederverwendbar ausgebildet sein. Bevorzugt werden die Behälter in verschiedene Größen und Farben zur Verfügung gestellt. Der Lebensmittelbehälter kann mikrowelltauglich, gefrierfest und/oder spülmaschinentauglich sein. Weiters kann der Behälter mit einem Datumsindikator ausgestattet sein. Im Weiteren sollen die Behälter aus Glas backofenfest sein.

Die Behälterdeckel können dank dem Laschenprinzip oder durch eine Klippverbindung (Ineinandergreifen von Deckel und Schale) fest mit der Hehälterschale verbunden sein und verhindern ein ungewolltes Lösen des Behälterdeckels bei Schlägen und einem evtl. Überdruck im Behälter.

Die Permeabilität des widerverwendbaren Behälters kann auf verschiedenste Weise realisiert sein. Wenigstens ein Teilbereich des Behälters kann aus einem für Gas permeablen Material bestehen. Es kann der gesamte Behälter aus einem permeablen Material bestehen oder es können lediglich Teilbereiche des Behälters permeabel ausgebildet sein. Als Teilbereich kann beispielsweise der gesamte Deckel oder wenigstens ein Teilbereich desselben ausgewählt sein. Die Permeabilität kann durch das Integrieren von permeablen Materialien in den Behälter realisiert werden. Als permeables Material kommt hier beispielsweise eine permeable und/oder mit Mikroporen versehene Folie in Frage. Die Folie kann dabei z.B. in einen Teil des Behälters, z.B. den Deckel, eingespritzt oder mit diesem verschweißt sein.

Der permeable Bereich kann sich unten, in der Mitte oder oben am Deckel befinden, kann mit dem Deckel verschweißt sein, eingespritzt oder der Deckel selbst kann ganz oder teilweise aus einem dünnen, permeablen Material bestehen (z.B. Styrolux von BASF). Der Behälterdeckel weist je nach Ausführung Löcher auf, welche nur von der Folie bedeckt sind und wodurch die Permeabilität gewährleistet wird. Der Deckel kann, muss aber je nach Permeabilitätsanforderungen, etc. nicht über Öffnungen verfügen. Wenn die Folie oder der dünne Teil des Deckels für die jeweilige Anwendung genügend permeabel ist und genügend mechanische Eigenschaften aufweist, um spülmaschinentauglich oder dgl. zu sein, kann die Folie "offen", d.h. eine große Öffnung überspannend, im Deckel angebracht werden. Der robuste Teil mit den Öffnungen um die Folie / dünner Teil soll die Folie / dünnerer, permeabler Teil vor Beschädigungen schützen, wenn die Folie je nach Anwendung zu fragil ist. Die Kombination aus einem robusten Deckel und einer oder mehreren permeablen Zonen im Deckel oder der permeable Deckel an und für sich kann in Kombination mit oder ohne ein oder mehrere Ventile erfolgen, die zum Ein- und/oder Auslass eines Gases in den Behälter dienen.

Bei einem Lebensmittelbeutel kann die Permeabilität derart erzielt werden, dass der Beutel Zonen aus einer permeablen Folie und Zonen aus einer nicht-permeablen Folie aufweist. Die Permeabilität kann sich dabei z.B. auf Grund der Foliendicke ergeben.

Die Erfindung wird nachfolgend anhand eines in der Zeichnung schematischen dargestellten Ausführungsbeispiels näher erläutert. In dieser zeigen
- Fig. 1: ein erstes Ausführungsbeispiel eines einen Gasvorrat enthaltenden Standgeräts mit angeschlossenem Handgeräts,
- Fig. 2: eine Detailansicht des Handgeräts gemäß Fig. 1,
- Fig. 3: ein zweites Ausführungsbeispiel des Standgeräts,
- Fig. 4: das Standgerät gemäß Fig. 3 mit geöffnetem Gehäuse,
- Fig. 5: eine erste Ausbildung der Ventileinheit des Lebensmittelbehälters im Längsschnitt in nicht betätigtem Zustand,
- Fig. 6: die Ventileinheit gemäß Fig. 5 in betätigtem Zustand,
- Fig. 7: die Ventileinheit gemäß Fig. 6 mit angeschlossenem Handgerät,
- Fig. 8: eine zweite Ausbildung der Ventileinheit im Längsschnitt in unbetätigtem Zustand,
- Fig. 9: die Ventileinheit gemäß Fig. 8 in betätigtem Zustand mit angeschlossenem Handgerät,
- Fig. 10: eine dritte Ausbildung der Ventileinheit im Längsschnitt in nicht betätigtem Zustand,
- Fig. 11: die Ventileinheit gemäß Fig. 10 in betätigtem Zustand,
- Fig. 12: die Ventileinheit gemäß Fig. 11 mit angeschlossenem Handgerät,
- Fig. 13: die Ventileinheit gemäß Fig. 11 in einer perspektivischen Ansicht,
- Fig. 14: eine vierte Ausbildung der Ventileinheit im Längsschnitt mit angeschlossenem Handgerät,
- Fig. 15: eine Ventileinheit gemäß Fig. 5 mit angeschlossenem Handgerät mit Mitteln zum Erzeugen eines Vakuums,
- Fig. 16: eine fünfte Ausbildung der Ventileinheit im Längsschnitt mit angeschlossenem Handgerät zum Erzeugen eines Vakuums,
- Fig. 17: eine Draufsicht auf die Ventileinheit gemäß Fig. 16,
- Fig. 18: eine Detailansicht der Handgerätedüse gemäß Fig. 16,
- Fig. 19: eine Detailansicht der Ventileinheit gemäß Fig. 16,
- Fig. 20: eine Ventileinheit gemäß Fig. 14 mit angeschlossenem Handgerät in einer abgewandelten Ausbildung,
- Fig. 21: und
- Fig. 22: Lebensmittelbehälterausbildungen mit integrierter Ventileinheit,
- Fig. 23: einen permeablen Behälterdeckel in einer ersten Ausbildung,
- Fig. 24: einen permeablen Behälterdeckel in einer abgewandelten Ausbildung,
- Fig. 25: einen permeablen Behälterdeckel in einer weiteren abgewandelten Ausbildung,
- Fig. 26: eine Beutelklammer,
- Fig. 27: die Beutelklammer gemäß Fig.26 in einer Schnittansicht,
- Fig. 28: einen Flaschenverschluss mit Ventil,
- Fig. 29: einen Flaschenausgießer mit Ventil,
- Fig. 30: eine Detailansicht der Fig. 29,
- Fig. 31: eine Flaschenausgießer mit Ventil in einer abgewandelten Ausbildung,
- Fig. 32: eine Detailansicht der Fig. 31
- Fig. 33: eine weiter abgewandelte Ausbildung einer Ventileinheit in geschlossenem Zustand,
- Fig. 34: eine Draufsicht auf die Ventileinheit gemäß Fig. 33,
- Fig. 35: die Ventileinheit gemäß Fig. 33 in offenem Zustand und
- Fig. 36: eine Draufsicht auf die Ventileinheit gemäß Fig. 35.

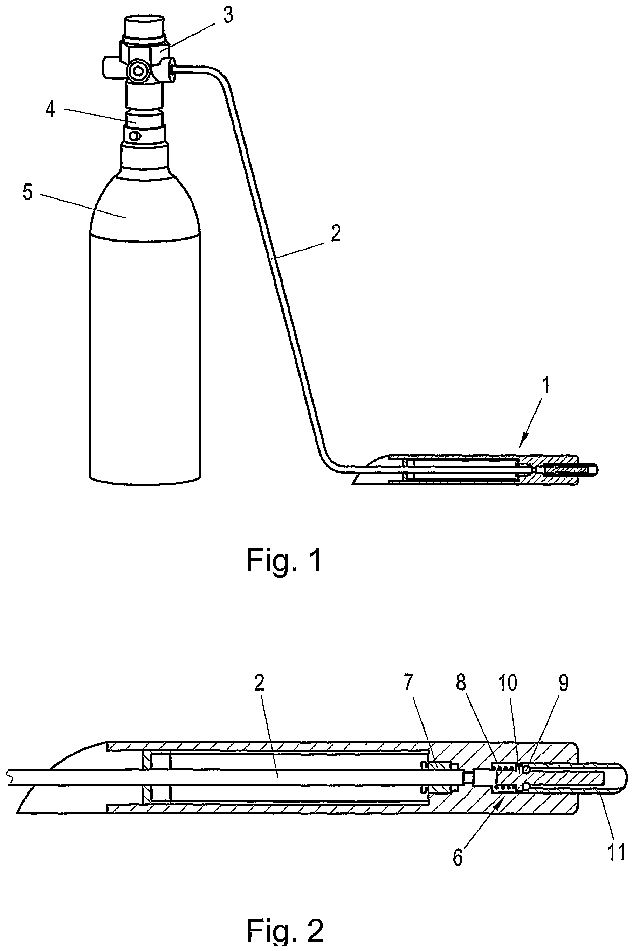

Die Fig. 1 und 2 zeigen eine erste Ausbildung des Handgeräts 1, das mittels eines Druckschlauchs 2 an einen Druckminderer 3 angeschlossen ist, der wiederum an ein Flaschenventil 4 des als Standgerät ausgebildeten Druckbehälters 5 angeschlossen ist. Gegebenenfalls kann auf den Druckminderer 3 auch verzichtet werden. Der Druckminderer 3, die Gasflasche 5 und diverse andere Komponenten können in einem Gehäuse eingebaut sein. Der Druckschlauch 2 und das Handgerät 1 sind immer unter Druck. Das Handgerät 1 wird zur Konservierung der Lebensmittel im nicht dargestellten Behälter oder Beutel in die Ventileinheit des Behälters bzw. Beutels eingeführt und niedergedrückt. Beim Niederdrücken des Handgeräts 1 öffnet sich das Handgeräteventil 6 sowie der Einlass und Auslass des Behälter- bzw. Beutelventils. Das Schutzgas strömt von der Gasflasche 5 durch den Druckminderer 3, den Druckschlauch 2, das Handgerät 1 und das Einlassventil des Behälters in diesen. Der Behälter bzw. der Beutel wird durch das Gas gespült und verlässt denjenigen durch das Auslassventil wieder. Beim Entfernen des Handgeräts 1 verschließt sich die Ventileinheit des Behälters bzw. Beutels sowie Handgeräteventil 6 von selbst. Der Behälter bzw. der Beutel ist somit hermetisch abgeschlossen und die Lebensmittel im Behälter bzw. Beutel befinden sich nun unter Schutzatmosphäre.

Wie in Fig. 2 ersichtlich ist der Druckschlauch 2 in das Handgerät 1 geführt und mit Hilfe einer Verschraubung 7 an das Handgeräteventil 6 angeschlossen. Das Handgeräteventil 6 besteht aus einem mit Hilfe einer Druckfeder 8 gegen eine Dichtung 9 gedrückten Kolben 10. Die Düse des Handgeräts ist mit 11 bezeichnet.

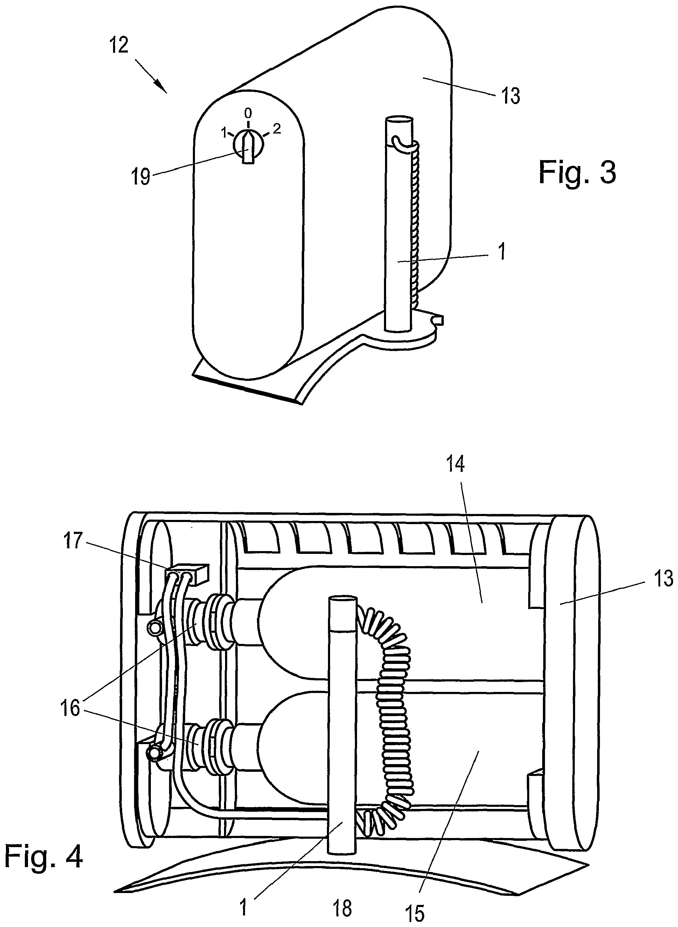

In den Fig. 3 und 4 ist eine abgewandelte Ausbildung des Standgeräts 12 dargestellt. Das Gerätegehäuse ist mit 13 bezeichnet und weist ein Handgerät 1 mit Spiralschlauch auf. Es sind zwei Gasflaschen 14,15 mit Druckminderer 16 und einem Wahl-Ventil 17 angeordnet. Das Handgerät 1 ist über den Spiralschlauch mit dem Wahl-Ventil 17 verbunden und weist einen Gasauslass 18 zum Anschließen oder Anhalten an ein Lebensmittelbehälterventil auf. Weiters ist ein Wahlschalter 19 zum Auswählen einer der beiden Gasflasche 14,15 vorgesehen.

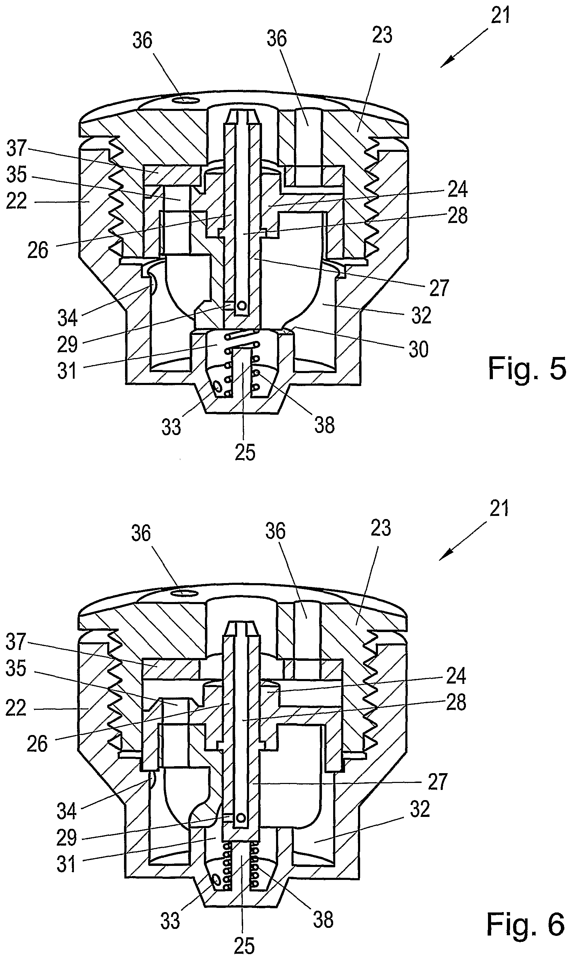

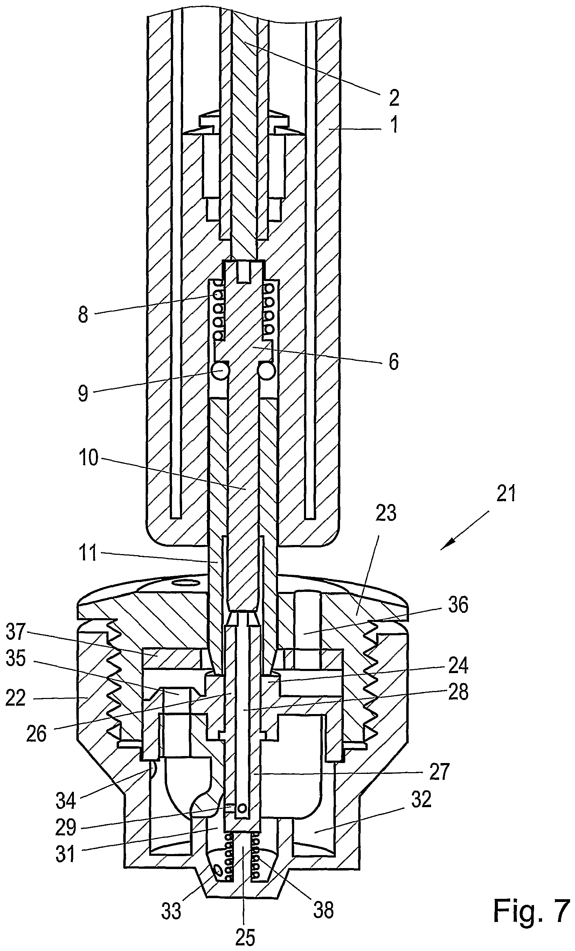

Die Fig. 5, 6 und 7 zeigen eine erste Ausbildung der Ventileinheit 21, wobei die Ventileinheit 21 in Fig. 5 in der geschlossenen Stellung und in Fig. 6 in der offenen Stellung dargestellt ist. Die Ventileinheit dient dem Spülen eines Behälters oder Beutels mit einem gasförmigen Medium. Sie kann im Deckel oder an der Seite des Behälters angebracht oder mit einem Kunststoffbeutel verschweißt sein. Das Gehäuse der Ventileinheit 21 besteht aus einem Gehäuseunterteil 22 und einem in ein Gewinde des Gehäuseunterteils 22 geschraubten Deckel 23. Mittels des Handgeräts 1, und insbesondere mit der Düse 11 und dem Kolben 10 des Handgeräts 1 kann beim Ansetzen desselben an die Ventileinheit 21 der Kolben 24 der Ventileinheit 21 verschoben werden (Fig. 6). Sobald der Kolben 24 bzw. die im Kolben festgelegte Kolbenstange 27 an dem einen Anschlag bildenden Vorsprung 25 anliegt, wird die Dichtung 26 leicht aufgedehnt. Drückt man das Handgerät 1 weiterhin (Fig. 6), kann das gasförmige Medium durch Öffnen des Ventils 6 im Handgerät 1 entweichen. Das gasförmige Medium strömt durch die zentrale Bohrung 28 der Kolbenstange 27 und entweicht aus der mit der als Sackbohrung ausgebildeten zentralen Bohrung 28 in Verbindung stehenden radialen Bohrung 29, indem die Kunststoffdichtung 26 weiter ausdehnt wird.

Beim Bewegen des Kolbens 24 von der in Fig. 5 in die in Fig. 6 dargestellte Verschiebelage dichtet die Kunststoffdichtung 26 an der Anschlagfläche 30 des Gehäuseunterteils 22 so, dass die Ventilkammer 31 des Einlassventils und die Ventilkammer 32 des Auslassventils in der Ventileinheit 21 voneinander getrennt werden und das gasförmige Medium nur durch die Einlassöffnungen 33 aus der Ventilkammer 31 des Einlassventils und in den Behälter bzw. Beutel entweichen kann. Gleichzeitig kann das sich im Behälter bzw. Beutel befindende gasförmige Medium durch die Auslassöffnungen 34 in die Ventilkammer 32 des Auslassventils, über die Gasdurchtrittsbohrungen 35 im Kolben 24 und die Öffnungen 36 im Deckel 23 entweichen. Die Öffnungen 36 im Ventildeckel 23 und die Gasdurchtrittsbohrungen 35 im Kolben 24 sind versetzt zueinander angeordnet, was ein optimales Verschließen des Auslassventils gewährleistet. Der Kolben 24 liegt in der verschlossenen Stellung des Auslassventils hierbei an einer ringförmigen Dichtscheibe 37 an. Sobald die Entlüftung abgeschlossen ist, muss das Handgerät 1 entfernt werden. Das Ventil 6 im Handgerät 1 wird auf Grund der Rückstellkraft der Druckfeder 8 automatisch verschlossen. In der Ventileinheit 21 befindet sich ebenfalls eine Druckfeder 38, welche den Kolben 24 beim Schließen des Ventils auf die Dichtscheibe 37 drückt und das Ventil dicht verschließt. Die Dichtung 26 ist zur Erleichterung des Entfernens für die Reinigung mit Ziehgriffen ausgestattet. Nach der Reinigung wird diese wieder in den Kolben 24 gedrückt.

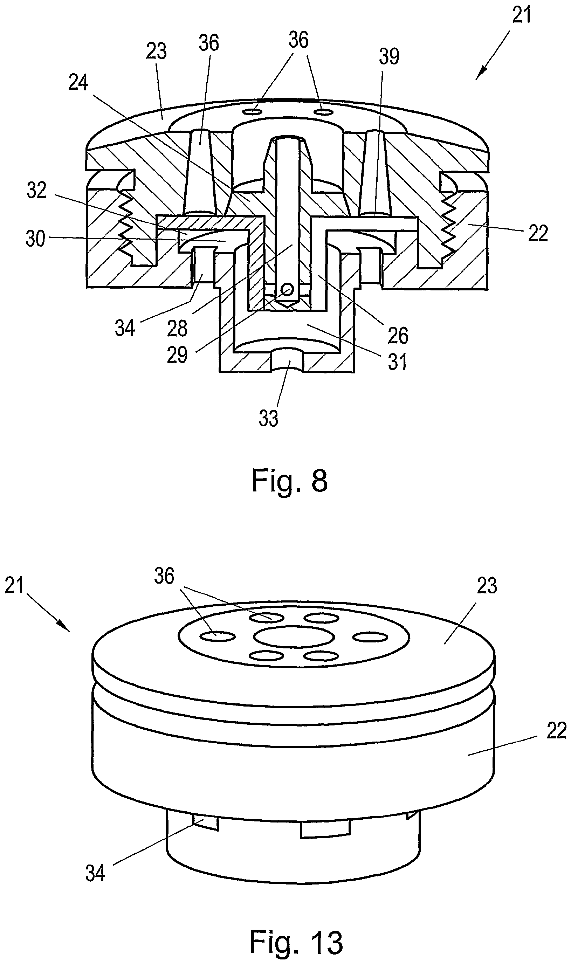

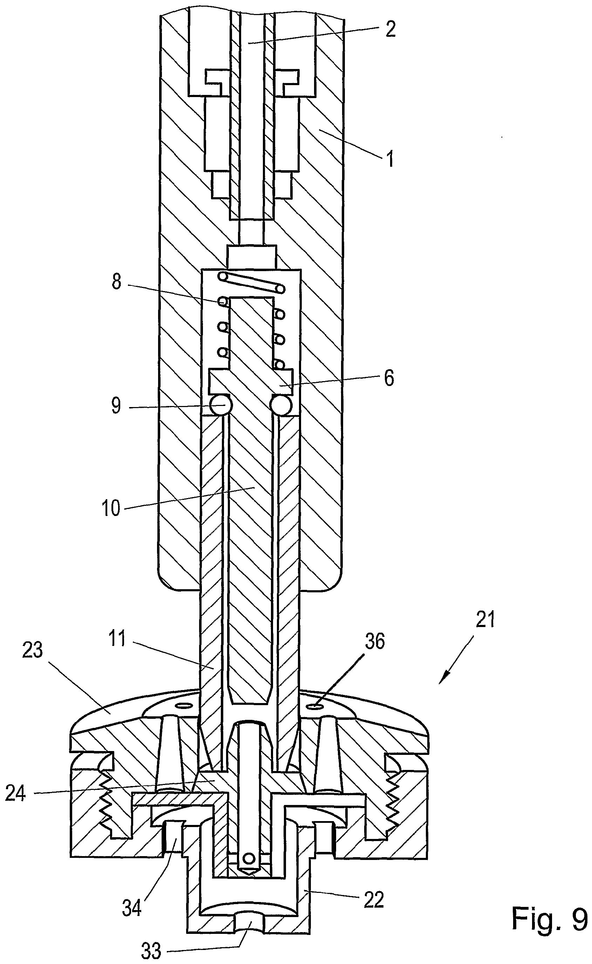

In den Fig. 8 und 9 ist eine alternative Ausbildung dargestellt. Mittels des Handgeräts 1 kann der Kolben 24 der Ventileinheit 21 verschoben werden. Der Kolben 24 wird durch Niederdrücken des Handgeräts 1 auf die Anschlagfläche 30 des Gehäuseunterteils 22 gedrückt. Drückt man das Handgerät 1 weiterhin, kann das gasförmige Medium durch Öffnen des Ventils 6 im Handgerät 1 entweichen. Das gasförmige Medium strömt durch die zentrale Bohrung 28 und die radiale Bohrung 29 des Kolbens 24 und entweicht aus dem Kolben 24 indem die Kunststoffdichtung 26 ausdehnt wird. Beim Bewegen des Kolbens 24 dichtet die Kunststoffdichtung 26 an der Anschlagfläche 30 des Gehäuseunterteils 22 so, dass die Ventilkammern 31 und 32 in der Ventileinheit 21 getrennt werden und das gasförmige Medium nur durch die Einlassöffnungen 33 aus der Ventilkammer 31 des Einlassventils in den Behälter bzw. Beutel entweichen kann. Gleichzeitig kann das sich im Behälter bzw. Beutel befindende gasförmige Medium über die Auslassöffnungen 34 in die Ventilkammer 32 des Auslassventils und die Gasdurchtrittsbohrungen 35 in der Dichtung 26 entweichen. Die Dichtung 26 ist hierbei geschlitzt. Durch das Niederdrücken des Kolbens 24 dehnen sich die Schlitze 39 in der Dichtung 26.

Sobald die Entlüftung abgeschlossen ist, muss das Handgerät 1 entfernt werden. Das Ventil 6 im Handgerät 1 wird automatisch verschlossen. Die Ventileinheit verschließt durch die Elastizität der Dichtung 26 oder unter Mithilfe einer Rückstellfeder wie bei der Ausbildung gemäß den Fig. 5 - 7 von selbst.

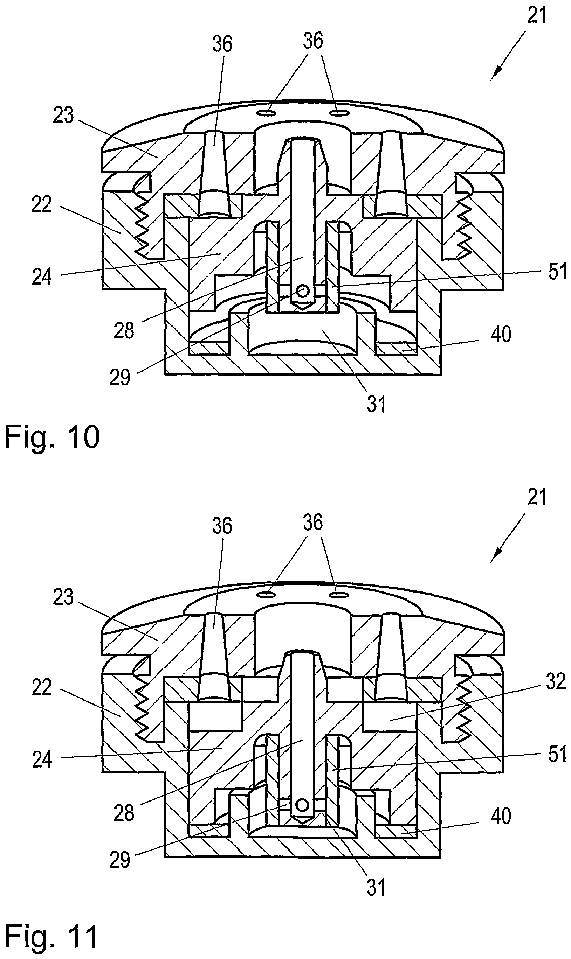

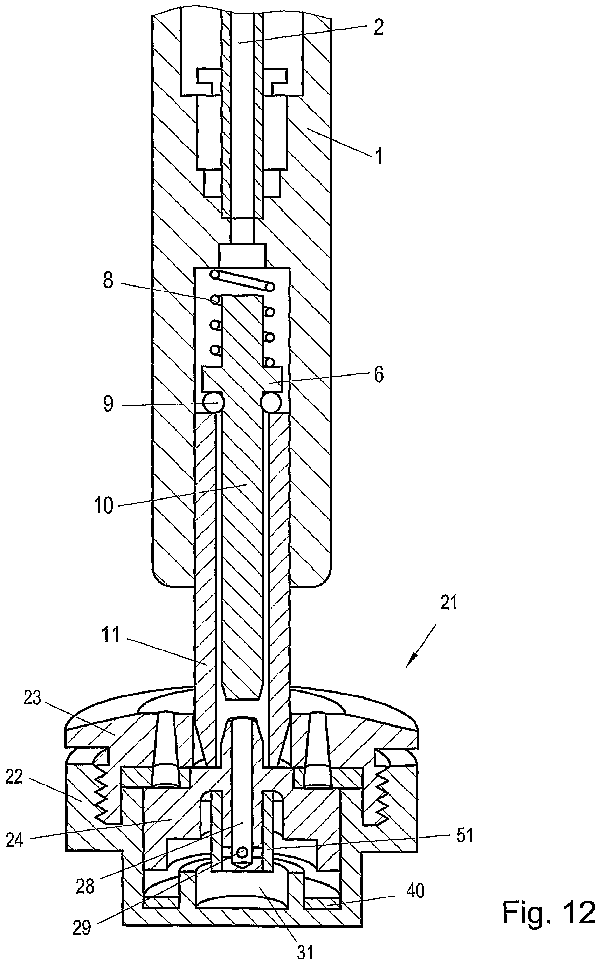

Die Fig. 10 - 13 zeigen eine weitere alternative Ausbildung der Ventileinheit 21. Die Ausbildung entspricht im wesentlichen der Ausbildung gemäß den Fig. 5 - 7, wobei aber keine Dichtung unmittelbar am Kolben 24 angebracht ist, sondern der Kolben 24 mit einer an der Grundfläche des Gehäuseunterteils angeordneten ringförmigen Dichtung 40 zusammenwirkt, wenn der Kolben 24 in die in Fig. 11 dargestellte untere Position verschoben wurde, in welcher die Ventileinheit 21 aktiviert bzw. geöffnet ist. Weiters ist eine gesonderte Dichtung 51 vorgesehen, die den Kolben im Bereich der radialen Bohrungen 29 umgibt.

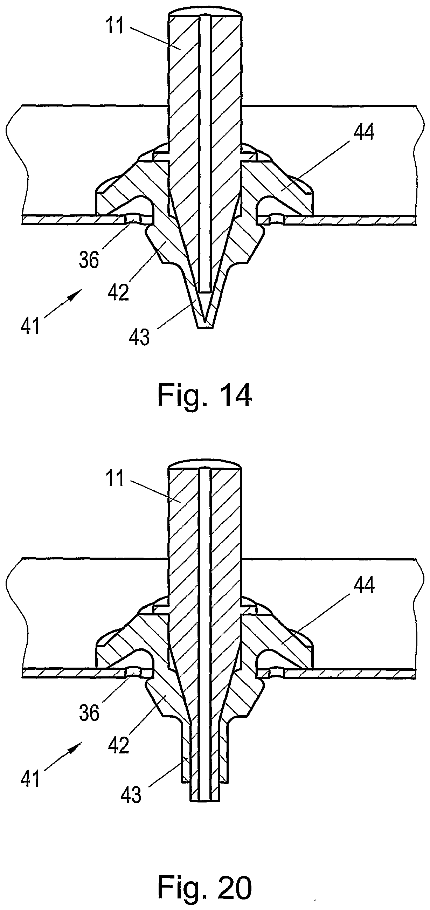

In Fig. 14 ist eine weitere alternative Ausbildung einer Ventileinheit 41 dargestellt, bei welcher das Einlass- und das Auslassventil ein gemeinsames elastisches Dichtungselement 42 aufweisen, wobei das Einlassventil von einem einen Ventilschnabel 43 ausbildenden Bereich des Dichtungselements 42 und das Auslassventil von einem eine Ventillippe 44 ausbildenden Bereich des Dichtungselements 42 gebildet ist, die eine Ventilplatte mit Auslassöffnungen 34 übergreift. Die Düse 11 am Handgerät 1 wird an der Ventileinheit 41 angesetzt und ist so zugleich abgedichtet. Man betätigt das Handgerät 1 und öffnet somit das Ventil 6 im Handgerät 1. Das Gas strömt durch die Düse 11, öffnet durch den Druck den Ventilschnabel 43 und strömt in den Behälter bzw. den Beutel und baut in diesem einen gewissen Überdruck auf. Ist der Überdruck im Behälter bzw. Beutel genügend groß öffnet sich die Lippendichtung 44 der Ventileinheit 41 und das Gas strömt durch die Auslassöffnungen 34 an der Ventilplatte, die ein Teil des Behälters oder ein zusätzliches Bauteil sein kann, aus dem Behälter bzw. Beutel, womit dieser gespült wird. Beim Entfernen des Handgeräts 1 verschließt sich die als Duck-Umbrella-Ventil ausgebildete Ventileinheit 41 durch den gering herrschenden Überdruck im Behälter bzw. Beutel, wodurch der Ventilschnabel 43 zusammengedrückt wird. Zugleich dient zu einem optimalen Verschließen der Ventileinheit die herrschende Vorspannung im Ventilschnabel 43.

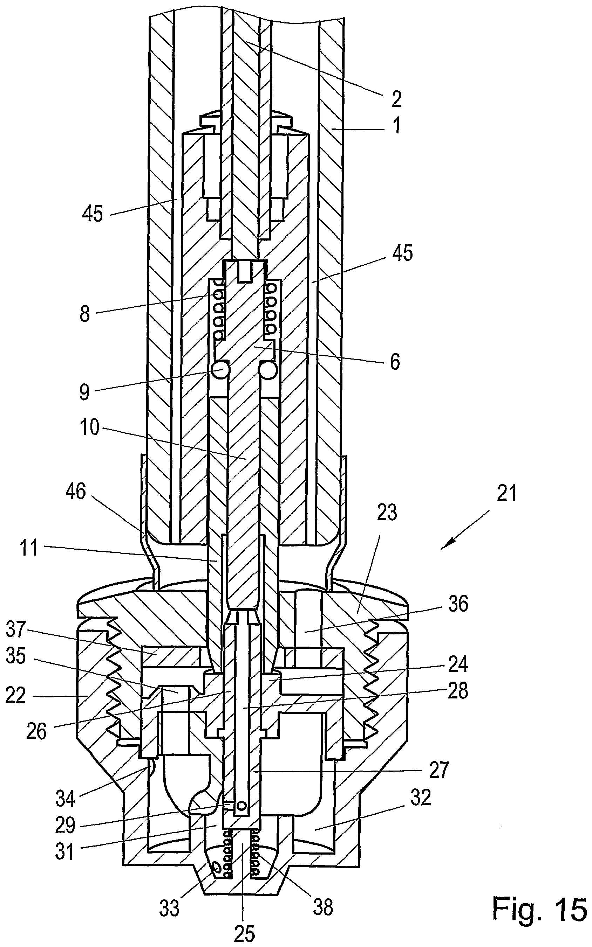

In Fig. 15 ist eine weitere alternative Ausbildung dargestellt, mit welcher ein Vakuum in dem Lebensmittelbehälter erzeugt werden kann und mit welchem unter Verwendung derselben Ventileinheit auch die Möglichkeit besteht, den Behälter mit Inertgas zu spülen.

Die Ventileinheit entspricht der in den Fig. 5 - 7 dargestellten Ventileinheit 21. Mittels des Handgeräts 1 kann der Kolben 24 der Ventileinheit 21 verschoben werden. Sobald der Kolben 24 mit der Anschlagfläche 30 zusammenwirkt, wird die Dichtung 26 leicht aufgedehnt. Durch Betätigen eines Umschaltventils (nicht dargestellt) am Handgerät 1, welches das Umschalten zwischen dem Modus Erzeugen eines Vakuums oder Spülung ermöglicht, wird die Vakuumpumpe aktiviert und erzeugt einen eingestellten Unterdruck.

Die Luft im Lebensmittelbehälter wird über die Auslassöffnungen 34 im Gehäuseunterteil 22, die Gasdurchtrittsbohrungen 35 im Kolben 24, die Öffnungen 36 im Deckel 23 und schlussendlich durch die Bohrungen 45 im Handgerät 1 angesaugt. Der Dichtadapterkopf 46 verhindert, dass Luft von der umgebenden Atmosphäre angesaugt wird. Dieser Dichtadapterkopf 46 kann fix oder abnehmbar am Handgerät 1 angebracht sein.

Nach Erreichen des eingestellten Unterdrucks, schaltet die Vakuumpumpe automatisch aus. Ist die Vakuumpumpe ausgeschaltet wird durch Umschalten des Umschaltventils (nicht dargestellt) im Handgerät 1 der Gasdurchfluss geöffnet und das gasförmige Medium strömt durch das Ventil 6 im Handgerät 1. Im Weiteren ergibt sich eine Funktionsweise wie sie bei der Beschreibung der Fig. 5 - 7 erläutert ist.

Es ist mit dieser Ventileinheit 21 und dem Handgerät 1 natürlich auch möglich, nur ein Vakuum zu erzeugen oder nur den Behälter bzw. Beutel zu spülen. Dies geschieht in dem man das Umschaltventil (nicht dargestellt) im Handgerät 1 in die entsprechende Position bringt und dadurch den entsprechenden Modus aktiviert (Vakuum oder Spülen).

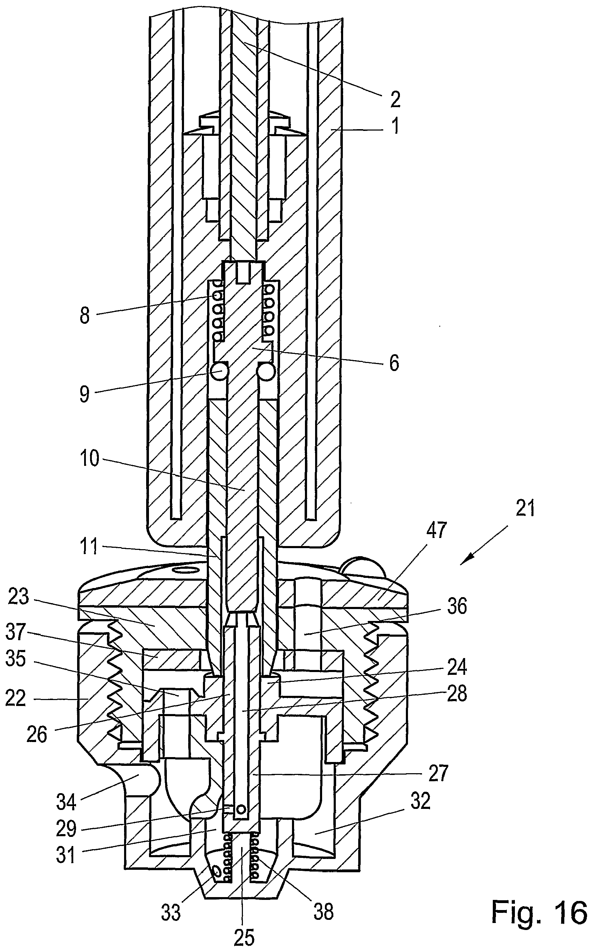

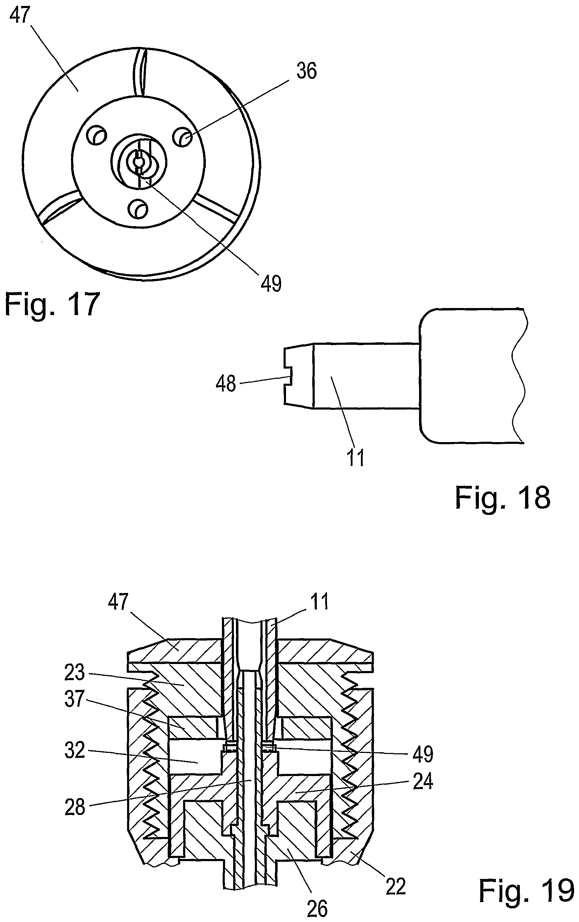

In den Fig. 16 - 19 ist eine alternative Ausbildung der Ventileinheit 21 dargestellt, mit welcher zusammen mit dem Handgerät 1 ein Vakuum in dem Lebensmittelbehälter erzeugt werden kann und mit welchem unter Verwendung derselben Ventileinheit auch die Möglichkeit besteht, den Behälter mit Inertgas zu spülen.

Die Ausbildung entspricht im Wesentlichen der Ausbildung gemäß den Fig. 5 - 7, wobei aber zum Erzeugen eines Vakuums die Öffnungen 36 im Ventildeckel 5 durch Drehen der Dichtscheibe 47 verschlossen werden können. Dies verhindert, dass Luft von der umgebenden Atmosphäre angesaugt wird. Somit wirkt die Ventileinheit 21 nur noch in eine Richtung.

Das Handgerät 1 wird so in die Ventileinheit 21 eingeführt, dass die Kerbe 48 an der Handgerätedüse 11 sowie die Kerbe 49 in der Ventileinheit 21 zueinander verschoben sind. Dies bewirkt, dass die Strömungskanäle frei sind und die Luft im Behälter bzw. Beutel nach Niederdrücken des Handgeräts 1 und somit des Kolbens 24 aus der Ventileinheit angesaugt werden kann. Sobald der Kolben 24 in Anschlag ist, wird die Dichtung 26 leicht aufgedehnt. Durch Betätigen des Umschaltventils (nicht dargestellt) am Handgerät 1, welches das Umschalten zwischen dem Modus Erzeugen eines Vakuums oder Spülung ermöglicht, wird die Vakuumpumpe aktiviert und erzeugt einen eingestelltes Unterdruck. Die Luft im Lebensmittelbehälter wird über die Auslassöffnungen 34 im Gehäuseunterteil 22, die Gasdurchtrittsbohrungen 35 im Kolben 24, die Öffnungen 36 im Ventildeckel 23 und schlussendlich durch die Handgerätedüse 11 angesaugt. Nach Erreichen des eingestellten Unterdrucks, schaltet die Vakuumpumpe automatisch aus.

Wird die Ventileinheit 21 zum Spülen des Behälters bzw. Beutels genutzt, so wird die Dichtscheibe 47 so gedreht, dass die Öffnungen 36 im Deckel 23 und in der Dichtscheibe 47 miteinander fluchten, womit die Entlüftungskanäle frei sind. Das Handgerät 1 wird so in die Ventileinheit eingeführt, dass die Kerbe 48 an der Handgerätedüse 11 sowie die Kerbe 49 in der Ventileinheit 21 in einander greifen. Dies bewirkt, dass die Strömungskanäle zwischen der Handgerätedüse 11 und der Ventilkammer 32 des Auslassventils geschlossen sind und das gasförmige Medium durch die Kolbenstange 27 strömen muss. Das Spülen des Lebensmittelbehälters kann dann in der Weise ablaufen, wie dies in der Beschreibung der Fig. 5 - 7 erläutert ist.

Dasselbe Prinzip der drehbaren Dichtscheibe zum Erzeugen eines Vakuums oder zum Durchführen einer Spülung kann auch bei der Ventileinheit gemäß den Fig. 8 und 9 oder bei der Ventileinheit gemäß den Fig. 10 bis 13 realisiert werden.

In Fig. 20 ist eine weitere alternative Ausbildung der Erfindung dargestellt, mit welcher ein Vakuum im Lebensmittelbehälter erzeugt und eine Spülung durchgeführt werden kann. Die Ventileinheit 41 entspricht im wesentlichen der Ventileinheit gemäß Fig. 14. Die Düse 11 am Handgerät 1 wird an der Ventileinheit 41 angesetzt, ist zugleich abgedichtet und durchdringt den Ventilschnabel 43. Das Umschaltventil im Handgerät 1, welches das Umschalten zwischen dem Modus Spülen oder Vakuum erlaubt (nicht dargestellt) wird betätigt (Aktivierung Vakuum). Die Luft im Behälter bzw. Beutel wird über die Handgerätedüse 11 angesaugt. Vor der Spülung wird ein Vakuum erzeugt, bei welchem die Dichtlippe 44 an die Ventilplatte gedrückt wird.

Nach Erzeugen eines Vakuums wird das Ventil am Handgerät 1 umgeschaltet und der Spülmodus aktiviert und es ergibt sich eine Spülung wie in der Beschreibung der Fig. 14 erläutert.

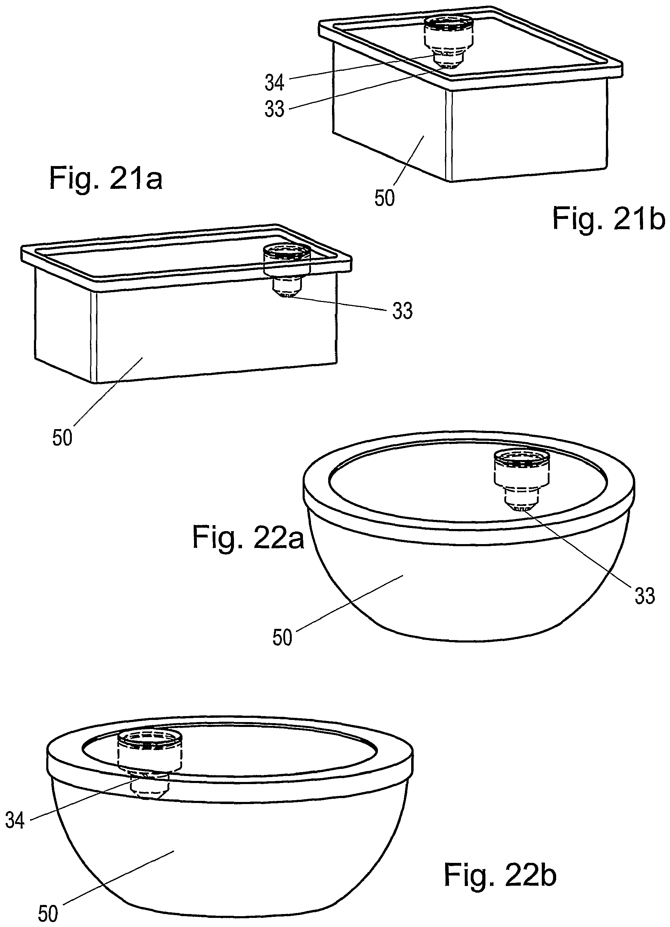

In den Fig. 21a, 21b, 22a und 22b sind Lebensmittelbehälter 50 dargestellt, die mit der Ventileinheit 21 ausgerüstet sind. Die Ventileinheit 21 ist jeweils im Deckel des Behälters 50 angeordnet, sodass jeder Behälter mit der entsprechenden Deckelgröße verwendet werden kann und es keinerlei spezieller Adaptierung des Behälters selbst bedarf.

Die Einlassöffnungen 33, über welche das Schutzgas in den Behälter 50 einströmt, sind so bezüglich der Behältergeometrie ausgerichtet, dass im Behälter zirkuläre bzw. wirbelartige Strömungen entstehen, die eine optimale Spülung des Behälters gewährleisten. Je nach Behältergeometrie ist somit die Ventileinheit 21 an einer anderen Position angebracht bzw. verfügt über eine andere Düsenausrichtung.

Das Schutzgas tritt über die Einlassöffnungen 33 in den Behälter 50 ein, erzeugt im Behälter 50 zirkuläre bzw. wirbelartige Strömungen, strömt nach dieser Rotationsbewegung über die Auslassöffnungen 34 in die Ventileinheit 21 und verlässt diese über die Öffnungen 36.

Um den Behälter vor einem allfälligen Überdruck zu schützen, kann ein gesondertes Überdruckventil im Behälter vorgesehen sein. Der Schutz vor einem Überdruck kann jedoch auch auf Stufe Gerät direkt erfolgen.

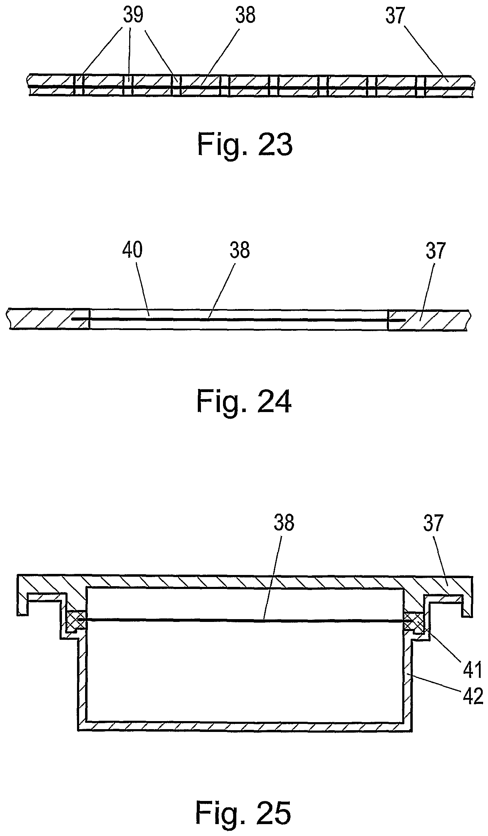

In Fig. 23 ist ein Deckel 37 eines Lebensmittelbehälters für "nicht atmende" Lebensmittel dargestellt. In dem Deckel 37 ist als Zwischenschicht eine permeable Folie 38 angeordnet. Der Deckel 37 weist eine Mehrzahl von Durchbrechungen 39 auf, über welche Gas durch die Folie 38 entweichen kann.

Wie in Fig. 24 gezeigt kann der Deckel 37 an Stelle der Mehrzahl an Durchbrechungen 39 einen einzigen offenen Bereich 40 aufweisen, welchen die permeable Folie 38 überspannt. Die Folie 38 kann dabei in den Behälterdeckel 37 eingeschweißt oder mit eingespritzt sein.

Fig. 25 zeigt eine Ausbildung, bei welcher der Deckel 37 einen Einsatz 41 aufweist, wobei der Einsatz 41 die Folie 38 aufweist. Bei dieser Ausführung mit einem Deckel 37 mit permeablem Einsatz 41 befindet sich der permeable Einsatz 41 zwischen dem Deckel 37 und der Behälterschale 42. Der Einsatz 41 kann in Teilen oder ganz aus der Schale 42 bzw. dem Deckel 37 entfernt werden. Er weist ein Gerüst (robuster Teil) auf, an welchem die Folie 38 angeschweißt, gespritzt oder dgl. ist. Diese kann sich unten, in der Mitte oder oben am Einsatz 41 befinden, kann mit dem Einsatz 41 verschweißt sein, eingespritzt oder der Einsatz 41 selbst kann ganz oder teilweise aus einem dünnen, permeablen Material bestehen (z.B. Styrolux von BASF). Der Einsatz 41 zwischen Behälterschale 42 und Behälterdeckel 37 gewährleistet die Permeabilität des Behälters und besitzt somit eine gewisse Gasdurchlässigkeit. Der Behälterdeckel 37 ist mit der Behälterschale 42 abnehmbar oder über Scharniere oder ähnliches verbunden und weist zur Atmung gewisse Öffnungen auf, ist selbst genügend permeabel oder wenn ein genügend großes Kopfvolumen vorhanden ist kann dieser auch dicht sein.

Der permeable Einsatz 41 funktioniert gleich wie der Deckel wie oben beschrieben. Das Gerüst kann also zum Schutz der Folie 38 über mehrere Öffnungen verfügen oder nicht. Der Einsatz 41 wird über den Deckel 37 auf die Schale 42 gedrückt oder wird in der Schale 42 verspannt, geklippst oder dgl. und trennt somit den Behälter in zwei oder mehrere Volumina. Der Einsatz kann, muss aber nicht, an den Kontaktstellen mit der Schale 42 und/oder Behälter über ein dichtendes Material verfügen. Im Weiteren kann auch das Gerüst selbst dichtend sein. Der Deckel 37 kann über eine oder mehrere Öffnungen verfügen, welche das obere Volumen mit der Atmosphäre verbindet und somit den Austausch der Gase gewährt.

Bei einer anderen Ausführung ist der Gesamtbehälter oder die Behälterschale teilweise oder ganz aus einem permeablen Material gefertigt. Die Folie kann mir der Behälterschale verschweißt sein, eingespritzt oder die Behälterschale selbst kann ganz oder teilweise aus einem dünnen, permeablen Material bestehen (z.B. Styrolux von BASF). Die Behälterschale weist je nach Ausführung Löcher auf, welche nur von der Folie bedeckt sind und wodurch die Permeabilität gewährleistet wird (Schutz der Folie, dünnschichtiger Teil des Behälters vor mechanischen Einflüssen). Ist die Folie jedoch genügend dick, können diese entfallen und nur die Folie (dünnwandiger Teil) kann einen Teil der Behälterdeckelfläche ausmachen oder die Gesamtschale.

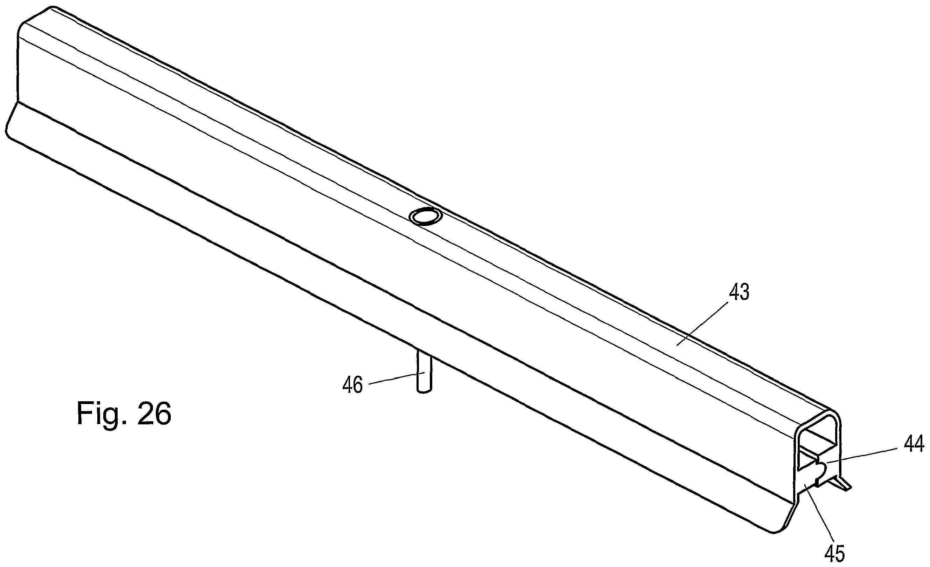

Das Ventil, unabhängig davon wie es ausgestaltet ist, kann mit Vorteil in eine Beutelklammer 43 zum Verschließen eines Lebensmittelbeutels integriert sein (siehe Fig. 26 und bis 27). Die Beutelklammer 43 dient zum Verschließen eines Beutels und anschließender Begasung der Lebensmittel im Beutel. Der Beutel wird zwischen den zwei Halterungen 44 und 45, die u-förmig, dreiecksförmig oder andere Geometrien aufweisen, eingeklemmt. Das Gasrohr oder der Gasschlauch 46 reicht somit ins Innere des Beutels. Die zwei Klammerhälften 44 und 45 drehen um die Drehlinie oder Drehlinien, welche entlang der Klammer 43 oder an einem der Beiden Enden sein kann/können. In der einen Klammerhälfte 44 bzw. 45 oder in der Mitte der Klammer 43 ist das Ventil 47 integriert.

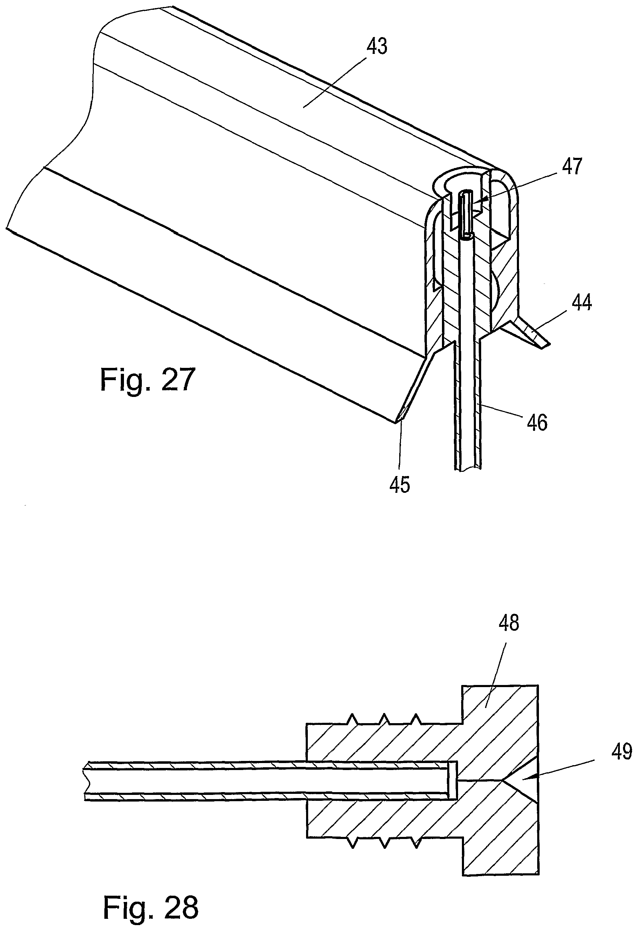

Das Ventil kann auch in einen Flaschenverschluss 48 integriert sein (siehe Fig. 28). Die verschieden Ventilausführungen können wie beim Beutelverschluss mit oder ohne Gasrohr kombiniert werden, welches in eine Flasche oder in einen allgemeinen Behälter reicht. Der Verschluss 48 ist als normaler Zapfen ausgeformt, welcher auf oder in die Flasche gesteckt wird und mit einem der bereits genannten Ventile oder dgl. versehen ist. Über das Ventil 49 kann somit die Flasche oder der Behälter gespült oder begast werden. Die Außenhülle des Verschlusszapfens 48 oder der Zapfen 48 selbst kann teilweise oder ganz aus einem Elastomer bestehen und somit der Zapfen und das Ventil 49 einstückig ausgebildet sein. Zur Begasung wird das Ventil 49 je nach Bauform entweder durch den Gasdruck geöffnet, man durchdringt das Ventil 49 mit einer Gasdüse oder das Ventil 49 wird durch einen Mechanismus durch Niederdrücken oder Drehen geöffnet.

Weiters kann ein kombinierter Ausgießer, Filter, Verschluss, Tropfenstop und System zum Oxidationsschutz bei Wein, Öl oder dgl. vorgesehen sein. Der Ausgießer soll das Ausperlen von CO₂ bei Sekt oder dgl. verhindern.

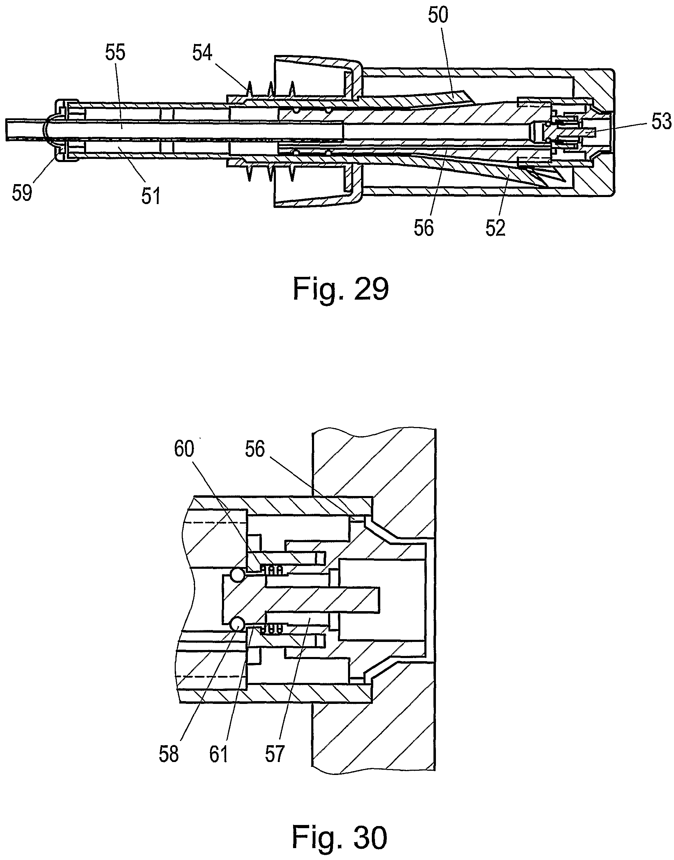

Die Fig. 29 und 30 zeigen in diesem Zusammenhang ein Verschlusssystem mit Ausgießer 50, Filter 51, Verschluss, Tropfenstop 52 und MAP-Schutzsystem, das für jegliche Flüssigkeiten wie z.B. Wein, Sekt, Öl, Essig, etc. eingesetzt werden kann. Der Ausgießer 50 wird auf eine Flasche aufgesetzt und dicht über die Dichtung 54 mit dieser verbunden. Das Verschlusssystem mit Ventil 53 mit/oder ohne Gasrohr 55 wird dann in diesen gesteckt. Durch Betätigen des Ventils 53 strömt das Gas über den Einlass 57 an der Dichtung 58 vorbei via Verschluss in die Flasche und spült diese. Existiert die Entlüftung 56 im Ventil 53 nicht, wird der Inhalt nur begast. Existiert diese, dann gespült. Das retournierende Gas strömt dann via Filter 51, Öffnung im Verschlusssystem 56 und anschließend dem Ventil 53 an die Atmosphäre. Die Dichtung 59 verschließt die Öffnung des Gasrohrs bei Benützung des Ausgießers. Somit fließt die Flüssigkeit durch den Filter, welcher zylindrisch oder radial im Ausgießer angebracht werden kann. Ist dieser radial angeordnet, also axial mit dem Gasrohr, durchdringt das Gasrohr den Filter (nicht dargestellt). Je nach Anwendung kann dieses Verschlusssystem über alle Funktionskomponenten verfügen oder nur Teilen davon.

Als Ventil können diverse Ventiltypen eingesetzt werden. Bei einem integrierten Ventil mit exzentrischen Einlasskanälen wird das Ventil 53 durch Niederdrücken betätigt, die Feder 60 komprimiert, und somit der Einlass und Auslass, sofern dieser vorhanden ist geöffnet. Das Gas strömt über die Einlassöffnungen 57, via Einlassdichtungspunkt 61 in die Flasche, Behälter, Beutel, etc. Ist das Ventil als 2-Wege-Ventil ausgebildet strömt das Gas über die Auslassöffnungen 56 an die Atmosphäre. Wird das Ventil nicht mehr betätigt ist Einlass und Auslass verschlossen. Das Ventil kann für sich alleine in einen Beutel, Flaschenzapfen, Behälter etc. eingebaut werden

Bei einem integrierten Ventil mit zentrischen Einlasskanälen wird das Ventil durch Niederdrücken betätigt, die Feder komprimiert, der Kolben bewegt sich nach unten und somit werden der Einlass und Auslass, sofern dieser vorhanden ist, geöffnet. Der Koben verschiebt sich und somit gelangen die Einlassöffnungen an diesem über die Vertiefung am Einlassstutzen in Wirkverbindung. Die Dichtung kann sowohl am Kolben wie auch am Einlassstutzen angebracht sein. Das Gas strömt somit über die zentrale Einlassöffnung, über die Vertiefung im Einlassstutzen in die Flasche, Behälter, Beutel, etc. Ist das Ventil als 2-Wege-Ventil ausgebildet, strömt das Gas über die Auslassöffnungen an die Atmosphäre. Wird das Ventil nicht mehr betätigt ist Einlass und Auslass verschlossen. Das Ventil kann für in einen Beutel, Flaschenzapfen, Behälter etc. eingebaut werden.

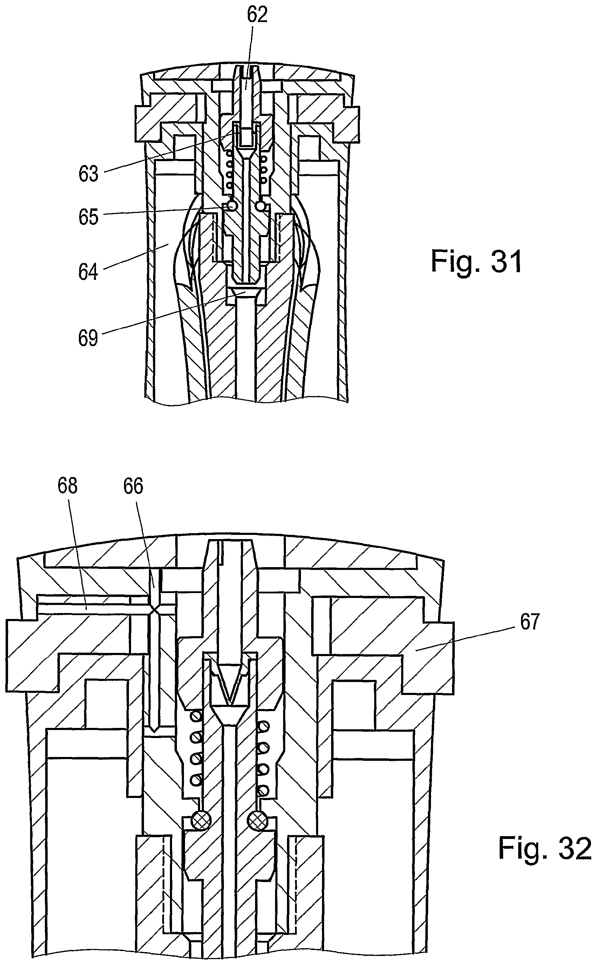

Bei einem Ventil mit zentralem Einlasskanal und einem Mechanismus zum Verschließen der Auslassöffnungen (Fig. 31 und 32) strömt das Gas beim Niederdrücken über die zentrale Öffnung 62 über eine Dichtung 63 in den Behälter oder Beutel. Beim Niederdrücken trennt der Stößel 64 das Einlass- und Auslassvolumen. Dieser drückt auf das Gasrohr 69. Das Gas strömt über das Auslassvolumen und deren Dichtung 65 über die Auslasskanäle 66 über das Drehrad 67 zum Verschließen der Auslassöffnungen an die Atmosphäre, wenn die Öffnungen 68 im Drehrad mit den Auslasskanälen 66 übereinstimmen. Sind die Auslasskanäle 66 durch das Drehrad 67 verschlossen, kann somit ein Überdruck im Behälter, Flasche erzeugt werden.

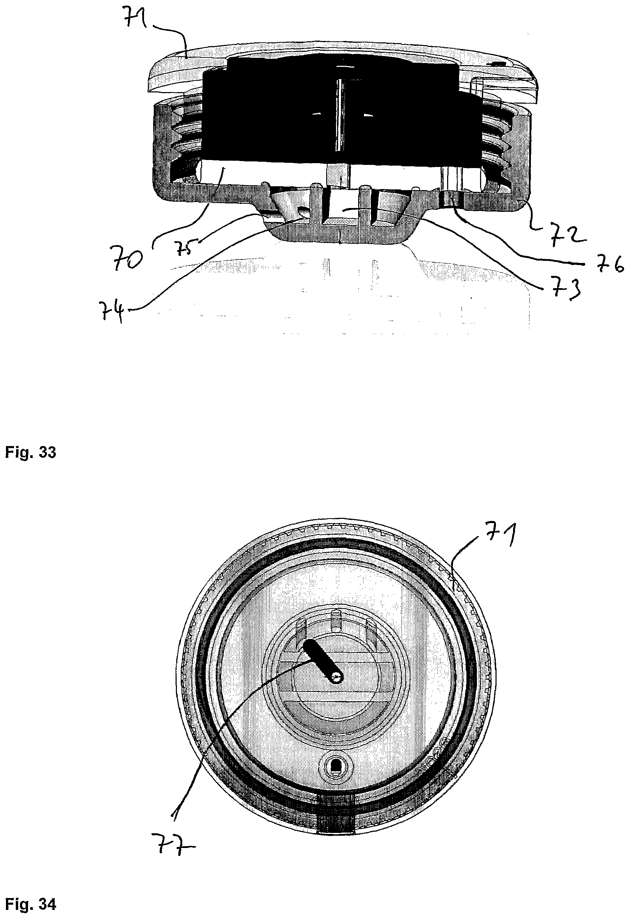

In den Fig. 33, 34, 35 und 36 ist eine weitere abgewandelte Ausbildung einer Ventileinheit dargestellt, wie sie in einen Lebensmittelbehälter integriert werden kann. Die Ventileinheit ist als drehbares Behälterventil ausgebildet. Das Grundlegende an diesem Behälterventil ist, dass das Öffnen und Verschließen des Ventils über eine Drehbewegung des Drehtellers 70 erfolgt. Das drehbare Behälterventil besteht aus einem Drehteller 70, einem Oberteil 71, welches mit dem Behälterdeckel oder Schale verschweißt oder direkt im Behälterdeckel oder in der Behälterschale integriert ist und einem Unterteil 72. Das Behälterventil wird zur Gaseinbringung in den Behälter durch eine Rotationsbewegung des Drehtellers 70 geöffnet. Somit kann das Gas in die Zwischenkammer 73 strömen, bei offenem Ventil dann in Kammer 74 und danach über Öffnungen 75 in den Behälter. In dieser Position ist auch die Gasaustrittsöffnung 76 im Behälterventil geöffnet und das Gas kann über das Ventil aus dem Behälter entweichen. Nach dem Einbringen des Gases in den Behälter wird das Ventil über eine erneute Drehbewegung wieder verschlossen. Das Ventil kann mittels Handgerät, dem Hauptgerät selbst (je nach Geräteausführung) oder von Hand betätigt werden. Zur Betätigung, d.h. zum Drehen des Drehtellers 70 ist eine Kerbe 77 vorgesehen.

Ist nur ein Einlassventil gefragt, besitzt das Ventil keine Gasaustrittsöffnung 76. Das Ventil kann zudem auch in einem Beutel oder ähnlichem integriert werden.

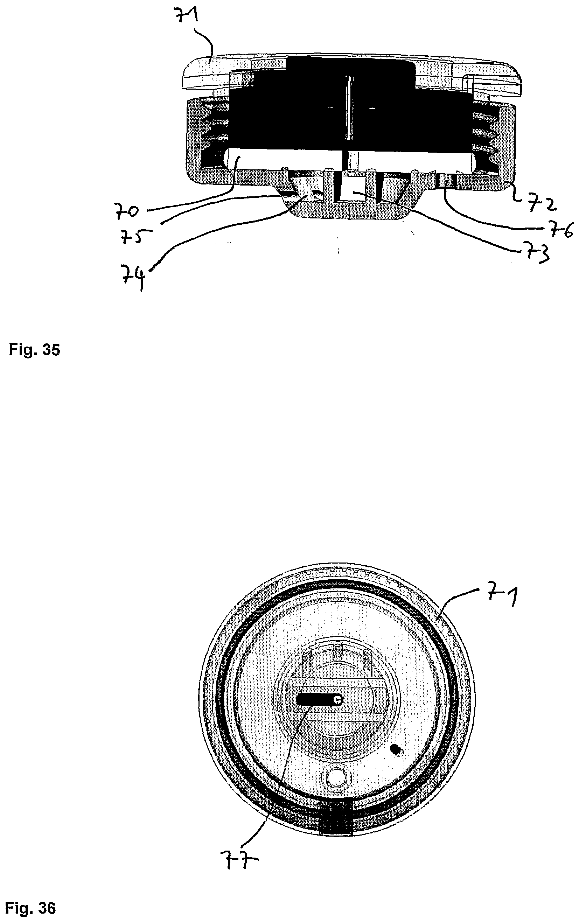

Fig. 33 und 34 zeigen das Ventil in geschlossenem Zustand. Fig. 35 und 36 zeigen das Ventil in offenem Zustand.

## Patentansprüche

1. Vorrichtung zum Konservieren von Lebensmitteln im Haushalt mit Hilfe eines Schutzgases, umfassend wenigstens ein einen Gasvorratsbehälter (14,15) aufweisendes Standgerät (12), ein mit dem Standgerät (12) über wenigstens eine flexible Leitung, insbesondere Druckschlauch, verbundenes Handgerät (1), das ein eigenes, das Schutzgas wahlweise freigebendes oder zurückhaltendes Ventil aufweist, und einen gasdicht verschließbaren Lebensmittelbehälter, wobei das Handgerät (1) zum Anschließen des Gasvorratsbehälters (14,15) an eine Ventileinheit des Lebensmittelbehälters vorgesehen ist und die Ventileinheit ein Einlass- und ein Auslassventil aufweist, die gleichzeitig betätigbar sind.

2. Vorrichtung nach Anspruch 1, **dadurch gekennzeichnet, dass** im Standgerät wenigstens zwei Gasvorratsbehälter (14,15), insbesondere Gaszylinder angeordnet sind, die vorzugsweise voneinander verschiedene Gasmischungen enthalten und über ein Wahlventil (17) an das Handgerät (1) angeschlossen sind.

3. Vorrichtung nach Anspruch 1 oder 2, **dadurch gekennzeichnet, dass** das Einlassventil radial innerhalb des Auslassventils angeordnet ist.

4. Vorrichtung nach Anspruch 1, 2 oder 3, **dadurch gekennzeichnet, dass** das Einlass- und das Auslassventil jeweils eine ventilkammer (31,32) aufweisen und die Ventilkammer (32) des Auslassventils als Ringkammer ausgebildet ist und die Ventilkammer (31) des Einlassventils in axialer Richtung gesehen umgibt.

5. Vorrichtung nach einem der Ansprüche 1 bis 4, **dadurch gekennzeichnet, dass** die Ventileinheit (21) eine in axialer Richtung verschiebbare Anschlagfläche für ein Betätigungsglied (10) des Handgeräts (1) aufweist, sodass das Einlass- und das Auslassventil beim axialen Einführen des Handgeräts (1) ggf. unter Verwendung des Gasdruckes geöffnet werden.

6. Vorrichtung nach einem der Ansprüche 1 bis 5, **dadurch gekennzeichnet, dass** das Handgerät (1) ein Ventil (6) aufweist und das Betätigungsglied des Handgeräts (1) als gegen die Kraft einer Feder (8) verschiebbares Ventilglied (10) des Handgeräteventils (6) ausgebildet ist oder mit diesem zusammenwirkt.

7. Vorrichtung nach einem der Ansprüche 1 bis 6, **dadurch gekennzeichnet, dass** die Ventileinheit (21) einen Ventilkolben (24) aufweist, der sowohl wenigstens eine Gasdurchtritts-Öffnung (28) des Einlassventils als auch wenigstens eine Gasdurchtrittsöffnung (35) des Auslassventils aufweist.

8. Vorrichtung nach einem der Ansprüche 1 bis 7, **dadurch gekennzeichnet, dass** die Ventileinheit (21) ein gemeinsam mit dem Ventilkolben (24) verschieb- und/oder verformbares Dichtungselement (26) aufweist, das in Abhängigkeit von der Verschiebelage bzw. der Verformung eine Verbindung zwischen den Ventilkammern (31,32) öffnet oder absperrt.

9. Vorrichtung nach einem der Ansprüche 1 bis 8, **dadurch gekennzeichnet, dass** der Ventilkolben (10) oder eine in den Ventilkolben (10) eintauchende, mit diesem bewegbare Kolbenstange (27) mit einer axialen Gasdurchtrittsbohrung (28) versehen ist, die als Sackbohrung ausgebildet ist und mit wenigstens einer radialen Bohrung (29) in Verbindung steht, die an einer der Innenwand eines Dichtungselements (26,51) mündet.

10. Vorrichtung nach einem der Ansprüche 1 bis 9, **dadurch gekennzeichnet, dass** die der wenigstens einen radialen Bohrung (29) benachbarte ringförmige Stirnfläche des Dichtungselements (26) mit einem Anschlag (30) des Ventilgehäuses (22) zusammenwirkt.

11. Vorrichtung nach einem der Ansprüche 1 bis 10, **dadurch gekennzeichnet, dass** der Ventilsitz des Auslassventils von einer Dichtscheibe (37) gebildet ist.

12. Vorrichtung nach Anspruch 1 oder 2, **dadurch gekennzeichnet, dass** das Einlass- und das Auslassventil ein gemeinsames elastisches Dichtungselement (42) aufweisen, wobei das Einlassventil von einem einen Ventilschnabel (43) ausbildenden Bereich des Dichtungselements (42) und das Auslassventil von einem eine Ventillippe (44) ausbildenden Bereich des Dichtungselements (42) gebildet ist, die eine Ventilplatte mit Auslassöffnungen (36) übergreift.

13. Vorrichtung nach einem der Ansprüche 1 bis 12, **dadurch gekennzeichnet, dass** eine Unterdruckquelle, wie z.B. eine Vakuumpumpe vorgesehen ist, die an das Handgerät (1) anschließbar oder in diesem angeordnet ist.

14. Vorrichtung nach Anspruch 13, **dadurch gekennzeichnet, dass** das Handgerät (1) die Austrittsöffnung(en) (36) des Auslassventils abdeckend bzw. umfassend an die Ventileinheit (21) anschließbar ist und wenigstens eine mit der Unterdruckquelle verbindbare, in einen mit den Austrittsöffnungen (36) in Verbindung stehenden Raum mündende Absaugleitung (45) aufweist.

15. Vorrichtung nach einem der Ansprüche 1 bis 14, **dadurch gekennzeichnet, dass** das Handgerät (1) zum Anschließen an eine Gasquelle zum Befüllen des Gasvorratsbehälters ausgebildet ist.

## Claims

1. A device for preserving foods at home by the aid of a projective gas, comprising at least one console (12) including a gas storage container (14,15), a handheld device (1) connected to the console (12) via at least one flexible conduit, in particular a pressure hose, said handheld device having its own valve optionally releasing or withholding the projective gas, and a gas-tight and closeable food container, wherein the handheld device (1) is provided for connecting the gas storage container (14,15) to a valve unit of the food container, and the valve unit comprises an inlet and an outlet valve, which are simultaneously operable.

2. A device according to claim 1, **characterized in that** at least two gas storage containers (14,15), in particular gas cylinders, are arranged in the console, said gas storage containers preferably containing different gas mixtures and being connected to the handheld device (1) via a selector valve (17).

3. A device according to claim 1 or 2, **characterized in that** the inlet valve is disposed radially within the outlet valve.

4. A device according to claim 1, 2 or 3, **characterized in that** the inlet and outlet valves each comprise a valve chamber (31,32), and the valve chamber (32) of the outlet valve is configured as an annular chamber surrounding the valve chamber (31) of the inlet valve, viewed in the axial direction.

5. A device according to any one of claims 1 to 4, **characterized in that** the valve unit (21) comprises a stop face displaceable in the axial direction for an actuating member (10) of the handheld device (1) such that the inlet and outlet valves are opened during the axial insertion of the handheld device (1), optionally by using the gas pressure.

6. A device according to any one of claims 1 to 5, **characterized in that** the handheld device (1) comprises a valve (6), and the actuating member of the handheld device (1) is configured as a valve member (10) displaceable against the force of a spring (8), of the handheld device valve (6) or interacts with the latter.

7. A device according to any one of claims 1 to 6, **characterized in that** the valve unit (21) comprises a valve piston (24) including both at least one gas passage opening (28) of the inlet valve and at least one gas passage opening (35) of the outlet valve.

8. A device according to any one of claims 1 to 7, **characterized in that** the valve unit (21) comprises a sealing element (26) that is displaceable and/or deformable together with the valve piston (24) and, as a function of the displacement position or deformation, opens or closes a connection between the valve chambers (31,32).

9. A device according to any one of claims 1 to 8, **characterized in that** the valve piston (10), or a piston rod (27) immersing into the valve piston (10) and movable together therewith, is provided with an axial gas passage bore (28), which is designed as a blind hole and communicates with at least one radial bore (29) opening on one of the inner walls of a sealing element (26, 51).

10. A device according to any one of claims 1 to 9, **characterized in that** the annular end face adjacent the at least one radial bore (29), of the sealing element (26) interacts with a stop (30) of the valve housing (22).

11. A device according to any one of claims 1 to 10, **characterized in that** the valve seat of the outlet valve is formed by a sealing washer (37).

12. A device according to claim 1 or 2, **characterized in that** the inlet and outlet valves comprise a common elastic sealing element (42), wherein the inlet valve is formed by a portion of the sealing element (42) forming a valve spout (43) and the outlet valve is formed by a portion of the sealing element (42) forming a valve lip (44) overlapping a valve plate having outlet openings (36).

13. A device according to any one of claims 1 to 12, **characterized in that** a negative pressure source such as a vacuum pump is provided, which is connectable to the handheld device (1) or disposed therein.

14. A device according to claim 13, **characterized in that** the handheld device (1) is connectable to the valve unit (21) so as to cover or encompass the outlet opening (s) (36) of the outlet valve and comprises at least one suction duct (45), which is connectable to the negative pressure source and opens into a space communicating with the outlet openings (36).

15. A device according to any one of claims 1 to 14, **characterised in that** the handheld device (1) is configured for connection to a gas source for filling the gas storage container.

## Revendications

1. Dispositif pour la conservation domestique de produits alimentaires à l'aide d'un gaz protecteur, comprenant au moins un appareil au sol (12) présentant un réservoir de gaz (14, 15), un appareil manuel (1) relié à l'appareil au sol (12) par l'intermédiaire au moins d'un conduit flexible, en particulier d'un tuyau flexible sous pression, lequel présente une vanne propre libérant ou retenant au choix le gaz protecteur, et un contenant à produits alimentaires pouvant être fermé de manière étanche aux gaz, dans lequel l'appareil manuel (1) est prévu afin de raccorder le réservoir de gaz (14, 15) à une unité de vannes du contenant à produits alimentaires et l'unité de vannes présente une vanne d'admission et une vanne d'évacuation, qui peuvent être actionnées dans le même temps.

2. Dispositif selon la revendication 1, **caractérisé en ce que** sont disposés, dans l'appareil au sol, au moins deux réservoir de gaz (14, 15), en particulier des cylindres de gaz, qui contiennent de préférence des mélanges de gaz différents les uns des autres et qui sont raccordés à l'appareil manuel (1) par l'intermédiaire d'une vanne de sélection (17).

3. Dispositif selon la revendication 1 ou 2, **caractérisé en ce que** la vanne d'admission est disposée de manière radiale à l'intérieur de la vanne d'évacuation.

4. Dispositif selon la revendication 1, 2 ou 3, **caractérisé en ce que** la vanne d'admission et la vanne d'évacuation présentent respectivement une chambre de vannes (31, 32), et la chambre de vanne (32) de la vanne d'évacuation est réalisée sous la forme d'une chambre circulaire et entoure la chambre de vanne (31) de la vanne d'admission vue dans une direction axiale.

5. Dispositif salon l'une quelconque des revendications 1 à 4, **caractérisé en ce que** l'unité de vannes (21) présente une surface de butée pouvant être déplacée par coulissement dans une direction axiale pour un organe d'actionnement (10) de l'appareil manuel (1) si bien que la vanne d'admission et la vanne d'évacuation sont ouvertes lors de l'introduction axiale de l'appareil manuel (1) éventuellement en utilisant la pression de gaz.

6. Dispositif selon l'une quelconque des revendications 1 à 5, **caractérisé en ce que** l'appareil manuel (1) présente une vanne (6), et l'organe d'actionnement de l'appareil manuel (1) est réalisé sous la forme d'un organe de vanne (10), pouvant être déplacé par coulissement à l'encontre de la force d'un ressort (8), de la vanne d'appareil manuel (6) ou coopère avec cette dernière.

7. Dispositif selon l'une quelconque des revendications 1 à 6, **caractérisé en ce que** l'unité de vannes (21) présente un piston de vanne (24), qui présente à la fois au moins une ouverture de passage de gaz (28) de la vanne d'admission qu'au moins une ouverture de passage de gaz (35) de la vanne d'évacuation.

8. Dispositif selon l'une quelconque des revendications 1 à 7, **caractérisé en ce que** l'unité de vannes (21) présente un élément d'étanchéité (26) pouvant être déplacé par coulissement et/ou pouvant être déformé conjointement avec le piston de vanne (24), lequel ouvre ou ferme une liaison entre les chambres de vanne (31, 32) en fonction de la position de coulissement ou de la déformation.

9. Dispositif selon l'une quelconque des revendications 1 à 8, **caractérisé en ce que** le piston de vanne (10) ou une tige de piston (27) s'enfonçant dans le piston de vanne (10), pouvant être déplacée avec ce dernier est pourvu(e) d'un alésage de passage de gaz (28) axial, qui est réalisé sous la forme d'un alésage borgne et est se trouve en liaison avec au moins un alésage (29) radial, qui débouche au niveau d'une paroi intérieure d'un élément d'étanchéité (26, 51).

10. Dispositif selon l'une quelconque des revendications 1 9, **caractérisé en ce que** la surface frontale de forme annulaire, adjacente à l'au moins un alésage (29) radial, de l'élément d'étanchéité (26) coopère avec une butée (30) du boîtier de vanne (22).

11. Dispositif selon l'une quelconque des revendications 1 à 10, **caractérisé en ce que** le siège de vanne de la vanne d'évacuation est formé par une rondelle étanche (37).

12. Dispositif selon la revendication 1 ou 2, **caractérisé en ce que** la vanne d'admission et la vanne d'évacuation présentent un élément d'étanchéité (42) élastique commun, dans lequel la vanne d'admission est formée d'une zone, réalisant un bec de vanne (43), de l'élément d'étanchéité (42) et la vanne d'évacuation est formée par une zone, réalisant une lèvre de vanne (44), de l'élément d'étanchéité (42), laquelle surmonte une plaque de vanne pourvue d'ouvertures d'évacuation (36).

13. Dispositif selon l'une quelconque des revendications 1 à 12, **caractérisé en ce qu'**une source de dépression, telle qu'une pompe à vide, est prévue, laquelle peut être raccordée à l'appareil manuel (1) ou est disposée dans ce dernier.

14. Dispositif selon la revendication 13, **caractérisé en ce que** l'appareil manuel (1) recouvrant ou comprenant la/les ouverture(s) d'évacuation (36) de la vanne d'évacuation peut être raccordé à unité de vannes (21) et présente au moins un conduit d'évacuation par aspiration (45) pouvant être relié à la source de dépression, débouchant dans un espace se trouvant en liaison avec les ouvertures d'évacuation (36).

15. Dispositif selon l'une quelconque des revendications 1 à 14, **caractérisé en ce que** l'appareil à main (1) est réalisé afin d'être raccordé à une source de gaz servant à remplir le réservoir de gaz.
